# EUROPÄISCHE PATENTSCHRIFT

(11) **EP 0 791 770 B1**
(45) Veröffentlichungstag und Bekanntmachung des Hinweises auf die Patenterteilung: **17.09.2003**
(21) Anmeldenummer: 97101857.7
(22) Anmeldetag: 06.02.1997
(51) Int. Cl.: F16H 61/30

(54) **Stelleinrichtung zur Automatisierung von Handschaltgetrieben von Kraftfahrzeugen**
Control unit for automatisation of a manual gearbox for automotive vehicles
Dispositif de contrôle pour automatiser des boîtes de vitesses manuelles de véhicules automobiles

(30) Priorität: 23.02.1996 DE 19606756
(43) Veröffentlichungstag der Anmeldung: 27.08.1997
(73) Patentinhaber: HYDRAULIK-RING ANTRIEBS- UND STEUERUNGSTECHNIK GmbH, 72622 Nürtingen (DE)
(72) Erfinder: Tischer, Dieter, 73240 Wendlingen (DE); Meyer, Roland, 91154 Roth (DE); Trzmiel, Alfred, 72661 Grafenberg (DE)
(74) Vertreter: Jackisch-Kohl, Anna-Katharina

(56) Entgegenhaltungen:
- EP-A- 0 039 955
- EP-A- 0 211 171
- EP-A- 0 490 730
- EP-A- 0 633 411
- EP-A- 0 651 183
- GB-A- 1 399 370
- GB-A- 2 214 248

## Beschreibung

Die Erfindung betrifft eine Stelleinrichtung zur Automatisierung von Handschaltgetrieben von Kraftfahrzeugen nach dem Oberbegriff des Anspruches 1.

Bei Handschaltgetrieben ist es bekannt, mit einem nach oben in den Fahrgastraum ragenden Schalthebel die jeweiligen Gänge des Kraftfahrzeuges einzulegen. Um ein solches Handschaltgetriebe zu automatisieren, sind Stelleinrichtungen bekannt, die winklig zueinander angeordnete Stelleinheiten aufweisen (EP 0 039 955 A1). Mit ihnen kann die Schaltwelle des Getriebes gedreht und verschoben werden. Die beiden Stelleinheiten haben jeweils eine Kolbenstange. Zur Gassenwahl wird die Kolbenstange der einen Stelleinheit ausgefahren, wodurch über einen Hebel die Schaltwelle verschoben wird. Um sie zu drehen, wird ein einarmiger Hebel der anderen Stelleinheit quer zur Verschieberichtung des Kolbens der Stelleinheit für die Gassenwahl verschoben, wodurch über einen weiteren einarmigen Hebel die Schaltwelle um ihre Achse gedreht wird. Die Stelleinheiten sind schwenkbar gegenüber dem Getriebe gelagert, wodurch erhebliche konstruktive Maßnahmen erforderlich sind, damit beim Verschieben und Drehen der Schaltwelle die Stelleinheiten die notwendigen Bewegungen ausführen können.

Es sind auch Stelleinrichtungen bekannt (EP 0 211 171 A1), bei denen eine Platte über einen sphärisch gelagerten zweiarmigen Hebel mit einer Stützplatte eines Handschaltgetriebes verbunden ist. Zwischen den beiden Platten befinden sich Stelleinheiten, die durch Verschwenken der Platte gegenüber der Stützplatte betätigt werden.

Bei einer anderen bekannten gattungsbildende Stelleinrichtung (EP 0 651 183 A2) sitzt auf der Schaltwelle ein Finger, auf den zwei Kolben wirken, mit denen dieser Finger und damit die Schaltwelle verschoben werden kann. Zum Drehen der Schaltwelle um ihre Achse ist ein zweiter Finger vorgesehen, der durch zwei weitere Kolben geschwenkt werden kann. Somit erfordert die Stelleinrichtung zwei unterschiedliche einarmige Hebel, an denen die Stelleinheiten angreifen.

Es ist schließlich eine Stelleinrichtung bekannt (EP 0 633 411 A1), bei der auf der Schaltwelle drehfest ein zweiarmiger Hebel sitzt, an dessen Enden zwei Stelleinheiten angreifen, um die Schaltwelle um ihre Achse zu drehen. Zum Verschieben der Schaltwelle ist eine weitere Stelleinheit vorgesehen.

Der Erfindung liegt die Aufgabe zugrunde, die gattungsgemäße Stelleinrichtung so auszubilden, daß sie bei kompakter und preisgünstiger Ausbildung eine problemlose Schaltung ermöglicht.

Diese Aufgabe wird bei der gattungsgemäßen Stelleinrichtung erfindungsgemäß mit den kennzeichnenden Merkmalen des Anspruches 1 gelöst.

Bei der erfindungsgemäßen Stelleinrichtung wird die Schaltwelle über den Hebel um ihre Achse gedreht und in ihrer Achsrichtung verschoben. Die ein- und ausfahrbaren Kolben der Stelleinrichtung werden vorzugsweise hydraulisch betätigt. Da Die Stelleinheiten winklig zueinander angeordnet sind, läßt sich die Schaltwelle des Getriebes in einfacher Weise durch Betätigung des entsprechenden Kolbens drehen und verschieben. Die Stelleinheiten können je nach den Einbauverhältnissen im Getriebebereich eingebaut werden. Es ist dadurch möglich, die erfindungsgemäße Stelleinrichtung auch dort vorzusehen, wo nur wenig Einbauraum zur Verfügung steht. Dies ist beispielsweise bei Fahrzeugen der Fall, bei denen das Getriebe in einem Tunnel untergebracht ist. Die erfindungsgemäße Stelleinrichtung zeichnet sich durch eine konstruktiv einfache Ausbildung aus.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung einen Teil eines Kraftfahrzeuges mit einer über der Vorderachse des Fahrzeuges liegenden Antriebseinheit, bestehend aus Motor, Kupplung und Getriebe, mit einem Schalthebel zum Schalten der Gänge,
- Fig. 2a und Fig. 2b: in schematischer Darstellung jeweils die Bewegungsbahnen des Handschalthebels bei der Gassenwahl bei einem 5- bzw. 6-Gang-Getriebe,
- Fig. 3a: im Querschnitt die Anbindung des Handschalthebels an das Getriebe,
- Fig. 3b: die Anbindung des Handschalthebels an das Getriebe im Längsschnitt,
- Fig. 4 bis Fig. 6: verscheiedene Ausführungsformen von erfindungsgemäßen Stelleinrichtungen,
- Fig. 7: einen Querschnitt durch die Stelleinrichtung gemäß Fig. 6,
- Fig. 8: in einer Darstellung entsprechend Fig 7 einen Querschnitt durch die Stelleinrichtung gemäß Fig. 6, die für ein Sechsganggetriebe vorgesehen ist,
- Fig. 9: in einer Darstellung entsprechend Fig. 7 einen Querschnitt durch eine weitere Ausführungsform einer erfindungsgemäßen Stelleinrichtung,
- Fig. 9a: die Maßverhältnisse bei der Stelleinrichtung gemäß Fig. 9,
- Fig. 10: in einer Darstellung entsprechend Fig. 9 einen Querschnitt durch einen Shiftaktuator einer weiteren Ausführungsform einer erfindungsgemäßen Stelleinrichtung,
- Fig. 11: in einer Darstellung entsprechend Fig. 10 einen Gearaktuator der erfindungsgemäßen Stelleinrichtung,
- Fig. 12: in schematischer Darstellung und im Querschnitt ein Kraftfahrzeug mit einem Kardantunnel,
- Fig. 13: einen Teil des Kraftfahrzeuges gemäß Fig. 12 in Seitenansicht,
- Fig. 14: die Bewegungen der Schaltwelle des Getriebes gemäß den Fig. 12 und 13,
- Fig. 15: eine Ansicht des Getriebes gemäß den Fig. 12 bis 14 mit einer Stelleinrichtung gemäß Fig. 6,
- Fig. 16: die am Getriebe gemäß Fig. 15 angebaute erfindungsgemäße Stelleinrichtung in Seitenansicht mit Teilschnitt in Längsrichtung,
- Fig. 17: im Längsschnitt einen Gearaktuator einer weiteren Ausführungsform einer erfindungsgemäßen Stelleinrichtung,
- Fig. 18: den Gearaktuator gemäß Fig. 17 in Stirnansicht,
- Fig. 19: in einem Längsschnitt einen Shiftaktuator, der zusammen mit dem Gearaktuator gemäß den Fig. 17 und 18 die Stelleinrichtung bildet,
- Fig. 20: den Shiftaktuator gemäß Fig. 19 in einem Schnitt längs der Linie XXI-XXI in Fig. 19,
- Fig. 21: einen am Getriebe angebauten Shiftaktuator gemäß den Fig. 19 und 20 in Seitenansicht und teilweise im Längsschnitt,
- Fig. 22: einen Schnitt längs der Linie A1-A1 in Fig. 21,
- Fig. 23: einen Schnitt längs der Linie A2-A2 in Fig. 21,
- Fig. 24 bis Fig. 26: in Darstellungen entsprechend den Fig. 21 bis 23 eine weitere Ausführungsform eines Shiftaktuators einer erfindungsgemäßen Stelleinrichtung,
- Fig. 27: teilweise in Seitenansicht und teilweise im Längsschnitt eine in ein Getriebe integrierte erfindungsgemäße Stelleinrichtung,
- Fig. 28: einen Schnitt längs der Linie C₁-C₁ in Fig. 27,
- Fig. 29: einen Schnitt längs der Linie C₂-C₂ in Fig. 27,
- Fig. 30 bis Fig. 32: in Darstellungen entsprechend den Fig. 21 bis 23 eine an ein Getriebe parallel zur Schaltwelle angebaute erfindungsgemäße Stelleinrichtung,
- Fig. 33: eine weitere Ausführungsform einer erfindungsgemäßen Stelleinrichtung in perspektivischer Darstellung,
- Fig. 34: teilweise in Seitenansicht und teilweise im Längsschnitt eine weitere Ausführungsform einer erfindungsgemäßen Stelleinrichtung mit einem ein Tilgerelement übergreifenden Brükkenelement,
- Fig. 35: einen Schnitt längs der Linie A-A in Fig. 34,
- Fig. 36: in einer Darstellung entsprechend Fig. 35 eine weitere Ausführungsform einer erfindungsgemäßen Stelleinrichtung,
- Fig. 37: in perspektivischer Darstellung eine weitere Ausführungsform einer erfindungsgemäßen Stelleinrichtung,
- Fig. 37a: einen Teil einer weiteren Ausführungsform einer erfindungsgemäßen Stelleinrichtung,
- Fig. 37b: einen Teil einer weiteren Ausführungsform einer erfindungsgemäßen Stelleinrichtung,
- Fig. 38: in perspektivischer Darstellung eine weitere Ausführungsform einer erfindungsgemäßen Stelleinrichtung,
- Fig. 39: in schematischer Darstellung den vorderen Teil eines Kraftfahrzeuges mit einem quer liegenden Frontmotor mit angebautem, ebenfalls quer liegendem Getriebe,
- Fig. 40: in schematischer Darstellung die Anbindung einer erfindungsgemäßen Stelleinrichtung an das Getriebe des Frontmotors gemäß Fig. 39,
- Fig. 41: in perspektivischer und schematischer Darstellung eine weitere Ausführungsform einer erfindungsgemäßen Stelleinrichtung die besonders geeignet für den Einbau gemäß Fig. 40 ist,
- Fig. 42: eine Ansicht in Richtung des Pfeiles x in Fig. 41,
- Fig. 43: in schematischer Darstellung den vorderen Teil eines Kraftfahrzeuges mit einem quer liegenden Frontmotor, an dessen Getriebeoberseite eine erfindungsgemäße Stelleinrichtung angeschlossen ist,
- Fig. 44: die Stelleinrichtung gemäß Fig. 43 in perspektivischer Darstellung.

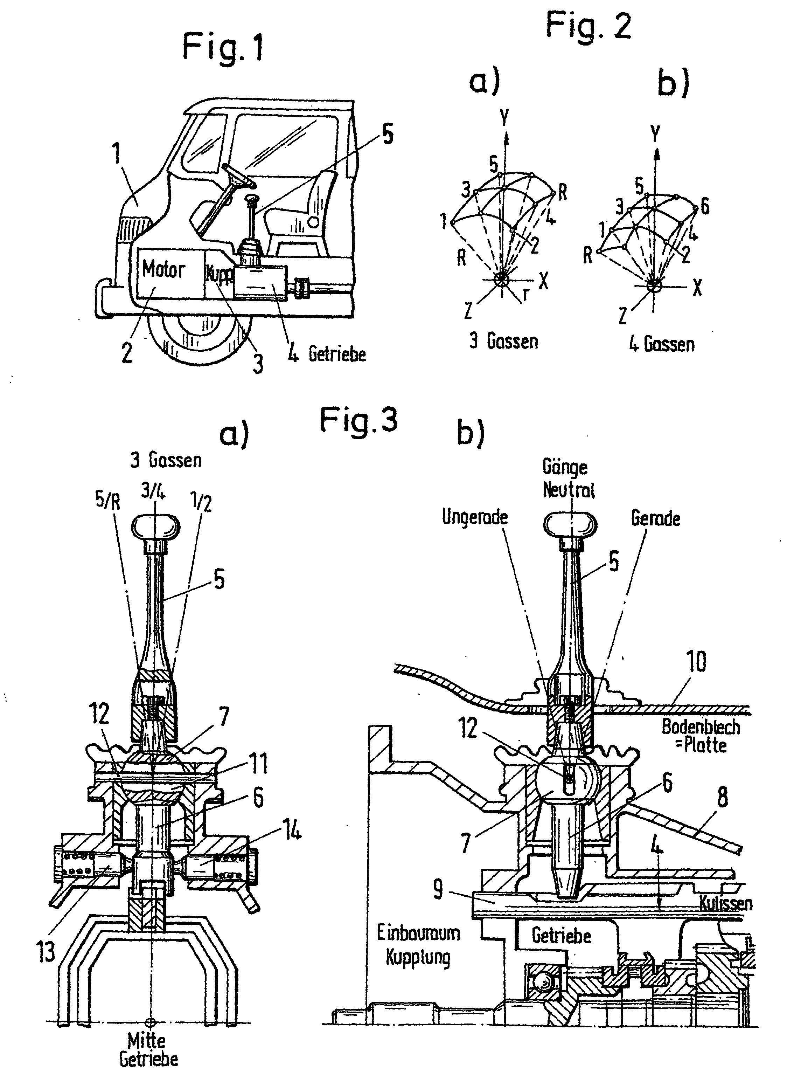

Fig. 1 zeigt ein Kraftfahrzeug 1, dessen Motor 2 vorn angeordnet ist. An ihn schließt über eine Kupplung 3 ein Getriebe 4 an. Von ihm steht nach oben in den Fahrgastraum ein Handschalthebel 5 ab, mit dem die Gänge eingelegt werden können. Die Fig. 2a und 2b zeigen das Bewegungsschema des Schalthebels 5. Fig. 2a zeigt die Verhältnisse bei einem Fünfganggetriebe. Die einzelnen Gänge sind mit 1 bis 5 und der Rückwärtsgang mit R bezeichnet. Die verschiedenen Gänge liegen in drei Gassen. Der Schalthebel 5 wird zum Einlegen des ersten und des zweiten Ganges zunächst aus der Neutralstellung in bekannter Weise in die erste Gasse verschwenkt und dann in Fahrtrichtung nach vorn oder nach hinten geschwenkt, um den ersten bzw. zweiten Gang einzulegen. Der Schalthebel 5 kann aus der Neutralstellung direkt in Fahrtrichtung nach vorn oder nach hinten geschwenkt werden, um den dritten bzw. vierten Gang einzulegen. Um den fünften Gang oder den Rückwärtsgang einzulegen, wird der Schalthebel 5 in die dritte Gasse verstellt.

Fig. 2b zeigt die Verhältnisse bei einem Sechsganggetriebe. Um die sechs Vorwärtsgänge sowie den Rückwärtsgang R einlegen zu können, sind insgesamt vier Gassen vorgesehen.

Wie die Fig. 3a und 3b zeigen, sitzt der Schalthebel 5 auf einem Getriebehebel 6, der über eine Kugel 7 im Getriebegehäuse 8 in bekannter Weise gelagert ist. Der Getriebehebel 6 greift in einen Kulissenschieber 9 des Getriebes 4 ein.

Der nach oben durch ein Bodenblech 10 des Kraftfahrzeuges 1 ragende Schalthebel 5 wird aus der in den Fig. 3a, 3b dargestellten Neutralstellung in die gewünschte Gasse quer zur Fahrtrichtung des Kraftfahrzeuges 1 geschwenkt. Sobald die gewünschte Gasse erreicht ist, wird der Schalthebel 5 in Fahrtrichtung nach vorn oder nach hinten geschwenkt, um den gewünschten Gang einzulegen. Beim Verschwenken des Schalthebels 5 um die Kugel 7 wird der Getriebehebel 6, der ebenfalls mit der Kugel 7 verbunden ist, in der entsprechenden Richtung geschwenkt. Dabei nimmt er den Kulissenschieber 9 in bekannter Weise mit.

Der Schalthebel 5 ist ohne zusätzliche Übertragungsmittel über den sphärisch gelagerten Getriebehebel 6 mit dem Getriebeschaltmechanismus in Wirkkontakt. Die Kugel 7 wird quer zur Achse des Kulissenschiebers 9 von einer Diametralöffnung 11 durchsetzt, durch die eine Lagerachse 12 ragt, deren beide Enden gehäusefest gelagert sind. Die Diametralöffnung 11 ist so ausgebildet, daß der Schalthebel 5 bzw. der Getriebehebel 6 sowohl in Fahrtrichtung nach vorn und nach hinten als auch quer zur Fahrtrichtung des Kraftfahrzeuges 1 geschwenkt werden kann.

Wie Fig. 3a zeigt, greifen an diametral einander gegenüberliegenden Stellen am Getriebehebel 6 zwei federbelastete Bolzen 13 und 14 an, die den Getriebehebel 6 und damit auch den Schalthebel 5 in der Neutralstellung halten. Wird der Schalthebel 5 geschwenkt, werden die Bolzen 13, 14 je nach Schwenkrichtung gegen die Federkraft verschoben. Unter der Federkraft wird der Schalthebel 5 auch wieder in seine Neutralstellung zurückgeführt.

Mit den im folgenden beschriebenen Stelleinrichtungen wird zusammen mit der zugehörigen elektronischen Ansteuerung das Handschaltgetriebe, das anhand der Fig. 1 bis 3 erläutert worden ist, automatisiert. Die Bewegungen des Schalthebels 5 werden durch entsprechende Stelleinheiten (Gear- und Shift-Aktuatoren) der Stelleinrichtung durchgeführt.

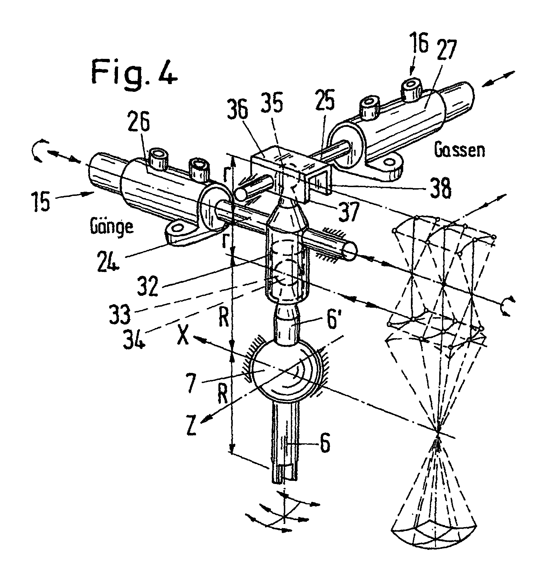

Fig. 4 zeigt eine Stelleinrichtung, bei der die Stelleinheiten 15, 16 rechtwinklig zueinander angeordnet sind. Auf den einen Arm 69 des Getriebehebels 6 wird ein Kupplungsstück 32 aufgesetzt. Es hat eine zylindrische Kugelaufnahmebohrung 33, in die eine am entsprechenden Getriebehebelarm 6' vorgesehene Kugel 34 eingreift.

Das Kupplungsstück 32 wird von der Kolbenstange 24 der Stelleinheit 15 radial durchsetzt. Das vom Getriebehebel 6 abgewandte Ende des Kupplungsstückes 32 hat eine Lagerkugel 35, die in einem U-förmigen Profilstück 36 aufgenommen ist. Es ist auf der Kolbenstange 25 der Stelleinheit 16 gelagert. Die Lagerkugel 35 des Kupplungsstückes 32 liegt an den Innenseiten der beiden Schenkel 37, 38 des Profilstückes 36 an.

Die Schenkel 37, 38 des Profilstückes 36 sitzen zwischen zwei koaxialen Abschnitten der Kolbenstange 25, die aus dem Zylindergehäuse 27 ragt. Auch die Kolbenstange 24 der Stelleinheit 15 ragt aus dem Zylindergehäuse 26.

Die beiden Zylindergehäuse 26, 27 sind fahrzeug- bzw. getriebefest angeordnet. Die Stelleinheit 15 dient zum Einlegen der Gänge, während die hierzu rechtwinklig angeordnete Stelleinheit 16 zur Gassenauswahl herangezogen wird. Durch Verfahren der Kolbenstange 25 der Stelleinheit 16 wird zunächst die jeweilige Gasse angefahren. Der Getriebehebel 6 wird hierbei in Z-Richtung verschwenkt. Infolge der kugelgelenkigen Lagerung des Kupplungsstückes 32 im Profilstück 36 ist die erforderliche Beweglichkeit des Profilstückes 36 gegenüber dem Kupplungsstück 32 bei diesem Verschwenkvorgang gewährleistet. Beim Verfahren der Kolbenstange 25 wird über das Profilstück 36, das axial fest auf der Kolbenstange sitzt, der Getriebehebel 6 mitgenommen, so daß er um die Kugel 7 in der gewünschten Richtung schwenkt. Sobald die gewünschte Gasse angefahren worden ist, wird die Kolbenstange 24 der Stelleinheit 15 in der entsprechenden Richtung verfahren, wodurch der Getriebehebel 6 in der angefahrenen Gasse zum Einlegen des gewünschten Ganges verschwenkt wird. Beim Verfahren der Kolbenstange 24 bewegt sich das Kupplungsstück 32 mit seiner Lagerkugel 35 längs des Profilstückes 36. Aus diesem Grunde ist die Kolbenstange 25 lediglich in ihrer Achsrichtung verschiebbar ausgebildet und gegen Drehen gesichert. Die Kolbenstange 24 der Stelleinheit 15 ist nicht nur in ihrer Achsrichtung verschiebbar, sondern außerdem auch um ihre Achse drehbar. Diese Drehbarkeit der Kolbenstange 24 ist erforderlich, da beim Verfahren der Kolbenstange 25 der Stelleinheit 16 das Kupplungsstück 32 in Z-Richtung bewegt wird, also sich quer zur Achse der Kolbenstange 24 bewegt.

Die Stelleinheiten 15 und 16 dienen somit dazu, zunächst in der beschriebenen Weise die Gasse und anschließend den gewünschten Gang anzufahren. Die Stelleinheiten 15, 16 werden vorteilhaft hydraulisch betätigt, um die Kolbenstangen 24, 25 in der gewünschten Richtung zu verschieben.

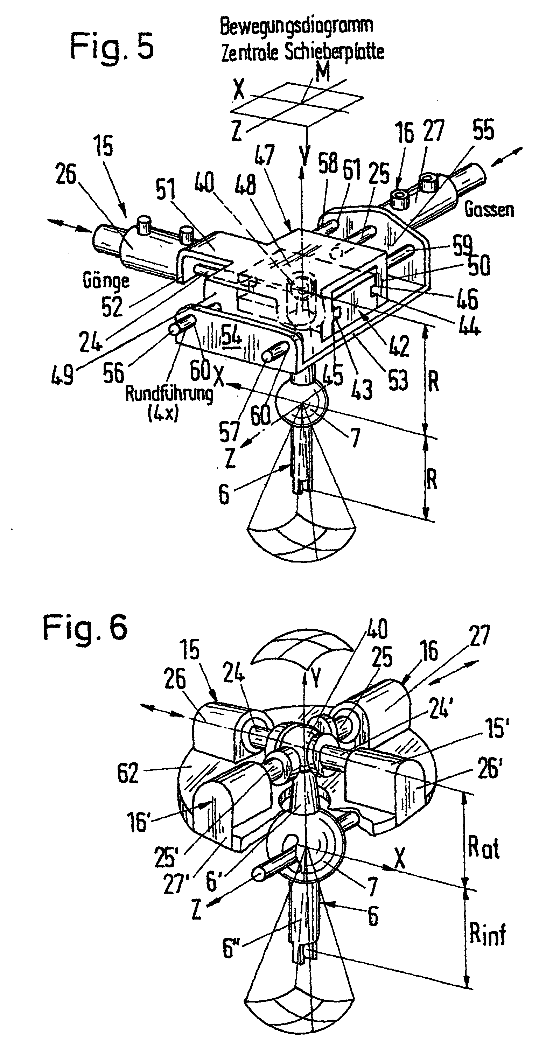

Fig. 5 zeigt eine Stelleinrichtung, die wiederum die beiden rechtwinklig zueinander liegenden Stelleinheiten 15 und 16 aufweist. Mit der Stelleinheit 15 werden die Gänge eingelegt, während mit der Stelleinheit 16 die Gassen des Getriebes angefahren werden. Der Arm 6' des Getriebehebels 6 wird durch ein Kupplungsstück 39 gebildet, das fest mit der Kugel 7 verbunden ist. Das Kupplungsstück 39 ist konisch ausgebildet und trägt am freien Ende einen Kugelkopf 40, der in eine zylindrische Kugelaufnahmebohrung 41 eines Schiebers 42 eingreift. Er ist quaderförmig ausgebildet und in X-Richtung, also in Achsrichtung, der Kolbenstange 24 der Stelleinheit 15 verschiebbar gelagert.

Der Schieber 42 weist auf seinen in X-Richtung sich erstreckenden Seitenflächen als Vertiefungen ausgebildete Führungen 43, 44 auf, in welche Führungsteile 45, 46 eines Supports 47 eingreifen. Er ist im wesentlichen U-förmig ausgebildet und hat einen Steg 48, welcher die beiden parallel zueinander liegenden Schenkel 49, 50 verbindet. An den einander zugewandten Innenseiten der Schenkel 49, 50 sind die Führungsteile 45, 46 vorgesehen, die vorteilhaft einstückig mit den Schenkeln ausgebildet sind. Die Schenkel 49, 50 erstrecken sich ebenfalls in X-Richtung und ragen in der Einbaulage der Stelleinrichtung nach unten.

Der Steg 48 ist auf seiner der Stelleinheit 15 zugewandten Seite mittig verlängert. Der Verlängerungsteil 51 hat einen nach unten abgebogenen Rand 52, an dem das Zylindergehäuse 26 der Stelleinheit 15 befestigt ist. Die Kolbenstange 24 der Stelleinheit 15 durchsetzt den Rand 52 und ist mit dem Schieber 42 fest verbunden. Durch Ein- und Ausfahren der Kolbenstange 24 wird somit der Schieber 42 in X-Richtung relativ zum Support 47 verschoben. Da das Kupplungsstück 39 über den Kugelkopf 40 in der Kugelaufnahmebohrung 41 des Schiebers 42 gelagert ist, wird bei dieser Schiebebewegung der Getriebehebel 6 um die Kugel 7 entsprechend geschwenkt.

Der Schieber 42 sitzt auf einer Basisplatte 53, die sich senkrecht zur Achsrichtung der Kolbenstange 24 erstreckt und parallel zum Steg 48 des Supports 47 angeordnet ist. Die Basisplatte 53 weist an beiden Enden parallel zueinander aufwärts gerichtete Schenkel 54 und 55 auf, deren Längserstreckung in X-Richtung liegt.

An den voneinander abgewandten Außenseiten der Schenkel 49, 50 des Supports sind 47 mit Abstand voneinander jeweils zwei parallele, in Z-Richtung angeordnete Stangen 56, 57 und 58, 59 vorgesehen, die als Rundführungen dienen und in entsprechenden Öffnungen 60, 61 in den Schenkeln 54, 55 der Basisplatte 53 gelagert sind.

Am Schenkel 55 der Basisplatte 53 ist das Zylindergehäuse 27 der Stelleinheit 16 befestigt. Ihre Kolbenstange 25 ragt durch den Schenkel 55 und ist am Schenkel 50 des Supports 47 befestigt.

Um die jeweilige Gasse anzufahren, wird die Stelleinheit 16 betätigt und deren Kolbenstange 25 in der gewünschten Z-Richtung verschoben. Dabei wird der Schieber 42 über den Support 47 mitgenommen, wodurch der Getriebehebel 6 entsprechend geschwenkt wird. Die Kugelaufnahmebohrung 41 im Schieber 42 ist so gestaltet, daß das Kupplungsstück 39 mit seinem Kugelkopf 40 sich bei der Schwenkbewegung des Getriebehebels 6 auch in Y-Richtung innerhalb der Kugelaufnahmebohrung bewegen kann. Sobald die gewünschte Gasse angefahren worden ist, wird mit der Stelleinheit 15 die Kolbenstange 24 entsprechend verschoben, wodurch der Schieber 42 in X-Richtung relativ zum Support 47 verschoben wird. Dadurch wird der Getriebehebel 6 innerhalb der angefahrenen Gasse so geschwenkt, daß der gewünschte Gang eingelegt wird.

Wie das in Fig. 5 angegebene Bewegungsdiagramm für den Schieber 42 zeigt, bewegt sich hierbei die Mittelachse M' der zentralen Kugelaufnahmebohrung 41 linear innerhalb der X-Z-Ebene. Unterhalb des Getriebehebels 6 ist das Bewegungsdiagramm des Getriebehebels dargestellt.

Während des Arbeitshubes der Stelleinheit 16 wird die Stelleinheit 15 in Z-Richtung translatorisch verschoben. Bei der vorigen Ausführungsform (Fig. 4) muß die nicht angewählte Stelleinheit 15 oder 16 auf Kurzschluß geschaltet sein, damit die durch die beschriebene Anordnung bedingten Ausgleichsbewegungen während des Schwenkens und Linearverschiebens erfolgen können. Bei der Ausführungsform nach Fig. 5 wird der Schieber 47 zur Erzeugung der unterschiedlichen Schwenkbewegungen des Getriebehebels 6 lediglich linear in der X-Z-Ebene verschoben. Darum ist bei dieser Ausführungsform eine Kurzschlußschaltung nicht erforderlich.

Fig. 6 zeigt eine äußerst kompakt ausgebildete Stelleinrichtung, die zudem sehr kostengünstig gefertigt werden kann. Sie hat insgesamt vier Stelleinheiten 15, 16, 15', 16', die jeweils einander gegenüberliegend angeordnet sind. Die Stelleinheiten 15, 15', 16, 16' sind jeweils gleich ausgebildet und haben die Kolben (Plungerkolben) 24, 25, 24', 25', die aus den Zylindergehäusen 26, 27, 26', 27' ragen. Sämtliche Kolben 24, 24', 25, 25' liegen am Kugelkopf 40 an, der am freien Ende des Armes 6' des zweiarmigen Getriebehebels 6 vorgesehen ist. Die Kolben liegen jeweils rechtwinklig zueinander. Auf diese Weise kann durch Beaufschlagen der jeweiligen Stelleinheiten der Getriebehebel 6 im gewünschten Maß für die Gassen- und die Gangwahl um die Kugel 7 geschwenkt werden. Die beiden Arme 6', 6" des Getriebehebels 6 sind vorteilhaft gleich lang. Sie haben jeweils die Länge R. Selbstverständlich können die beiden Arme des Getriebehebels 6 auch unterschiedlich lang sein, je nach den vorhandenen Einbau- und Kräfteverhältnissen. Jeweils einander gegenüberliegende Kolben 24, 24' und 25, 25' liegen vorteilhaft fluchtend zueinander. Die Kolben 24, 24' liegen in X-Richtung, während sich die Kolben 25, 25' in Z-Richtung erstrecken.

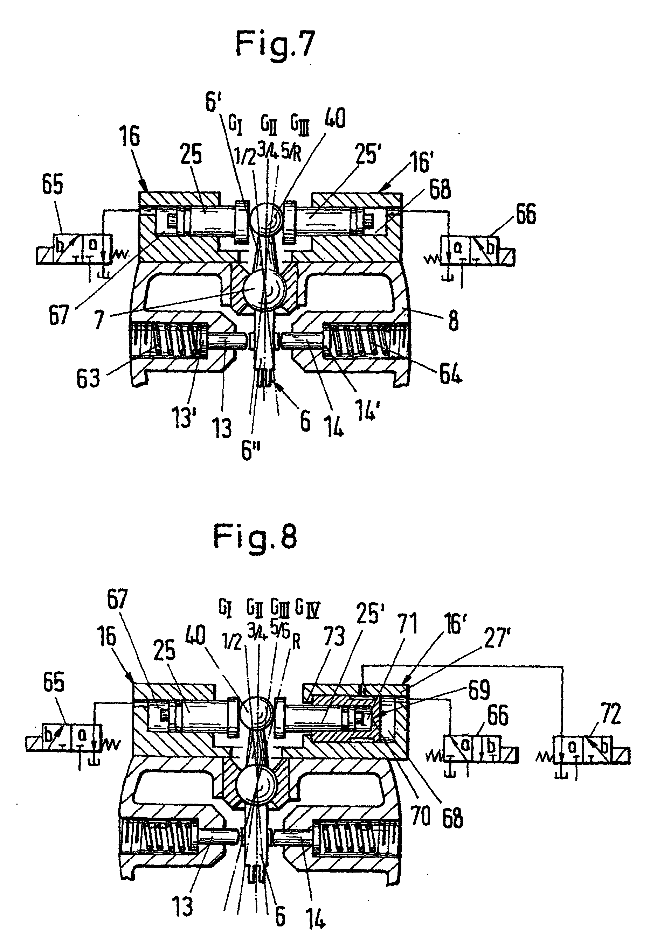

Die Stelleinheiten können die unterschiedlichsten Ausbildungen haben. Anhand der Fig. 7 bis 11 werden vorteilhafte Ausführungen solcher Stelleinheiten näher erläutert. Sämtliche Stelleinheiten können auf einer gemeinsamen Grundplatte 62 montiert sein.

Fig. 7 zeigt zwei einander gegenüberliegende, ein gemeinsames Gehäuse aufweisende Stelleinheiten 16, 16', mit denen die Gassenwahl getroffen wird. Die beiden Stelleinheiten sind auf dem Getriebegehäuse 8 montiert, in dem der Getriebehebel 6 in der beschriebenen Weise mittels der Kugel 7 sphärisch gelagert ist. Am getriebeseitigen Arm 6" des Getriebehebels 6 greifen diametral einander gegenüberliegend die Bolzen 13 und 14 an, die jeweils unter der Kraft einer Druckfeder 63, 64 stehen. Dadurch wird der Getriebehebel 6 in seiner Neutralstellung zentriert, in der die Bolzen 13, 14 jeweils mit einem Bund 13', 14' an jeweils einem getriebegehäuseseitigen Anschlag anliegen.

Am Kugelkopf 40 des anderen Armes 6' des Getriebehebels 6 liegen die beiden Kolben 25, 25' der Stelleinheiten 16, 16' an. Die freien Enden der Kolben sind vorteilhaft verbreitert ausgebildet.

Die Zuführung von Hydraulikmedium in die Stelleinheiten 16, 16' wird durch Ventile 65 und 66 gesteuert. In der in Fig. 7 dargestellten Neutralstellung des Getriebehebels 6 sind die Magnetventile 65, 66 so geschaltet, daß die Druckräume 67, 68 der Stelleinheiten 16, 16' mit dem Tank verbunden sind. Soll der Getriebehebel 6 in der Darstellung gemäß Fig. 7 entgegen dem Uhrzeigersinn geschwenkt werden, wird das Magnetventil 66 umgeschaltet, so daß das Hydraulikmedium unter Druck in den Druckraum 68 strömt und dadurch den Kolben 25' ausfährt. Das Magnetventil 65 wird nicht umgeschaltet, so daß beim Verschwenken des Getriebehebels 6 durch den ausfahrenden Kolben 25' der gegenüberliegende Kolben 25 auf Anschlag zurückgeschoben werden kann. Auf diese Weise kann der Getriebehebel 6 einfach in die Gasse G_{I} geschwenkt werden.

Ebenso ist es möglich, ausgehend von der Neutralstellung (Gasse G_{II}) das Magnetventil 65 so umzuschalten, daß das Hydraulikmedium unter Druck in den Druckraum 67 strömt. Dann wird der Kolben 25 ausgefahren und der Getriebehebel 6 im Uhrzeigersinn geschwenkt. Da das Magnetventil 66 ausgeschaltet bleibt, wird somit der Kolben 25' durch den Kugelkopf 40 des Getriebehebels 6 bis auf Anschlag zurückgeschoben. Damit kann der Getriebehebel 6 in die Gasse G_{III} verschwenkt werden.

Um den Getriebehebel 6 wieder in die Neutralstellung zurückzuschwenken, werden beide Magnetventile 65, 66 in die magnetbelastete Schaltstellung b geschaltet, in der die beiden Druckräume 67, 68 mit Systemdruck beaufschlagt sind. Der Bolzen 13, 14 der jeweils vorgespannten Druckfeder 63, 64 schwenkt den Getriebehebel 6 in die gezeichnete Neutralstellung zurück. Beide Kolben 25, 25' bewegen sich dabei synchron.

Bei der Ausführungsform gemäß Fig. 8 wird der Kolben 25' der Stelleinheit 16' in einem Hilfskolben 69 gelagert, der seinerseits innerhalb des Zylindergehäuses 27' der Stelleinheit 16' verschoben werden kann. Zwischen dem Boden 70 des Hilfskolbens 69 und dem Kolben 25' wird ein Druckraum 71 gebildet, in den ein mit einem Magnetventil 72 verbundener Anschluß führt. Das Magnetventil 66 ist mit dem Druckraum 68 zwischen dem Boden 70 des Hilfskolbens 69 und dem Boden des Zylindergehäuses 27' verbunden.

Der Getriebehebel 6 wird in seiner dargestellten Neutralstellung durch die Bolzen 13, 14 zentriert. Die beiden Ventile 65 und 72 sind so geschaltet, daß die Druckräume 67 und 71 mit dem Tank verbunden sind. Das Magnetventil 66 ist so geschaltet, daß in den Druckraum 68 unter Druck stehendes Hydraulikmedium strömen kann. Dadurch wird der Hilfskolben 69 in Richtung auf seine in Fig. 8 linke Endstellung belastet, in der er an einem Anschlag 73 anliegt. Die vom Hydraulikmedium im Druckraum 68 beaufschlagte Fläche des Hilfskolbens 69 ist größer als die vom Hydraulikmedium in den Druckräumen 67 und 71 beaufschlagten Flächen der Kolben 25, 25'. Dadurch wird der Hilfskolben 69 bei Druckbeaufschlagung des Hydraulikmediums im Druckraum 69 in seiner dargestellten Anschlagstellung gehalten. Auf diese Weise ist der Rückwärtsgang R in noch zu beschreibender Weise gegen unbeabsichtigtes Einlegen gesperrt. Soll der Getriebehebel 6 entgegen dem Uhrzeigersinn aus der Neutralstellung gemäß Fig. 8 in die Gasse G_{I} geschwenkt werden, wird das Magnetventil 72 so umgeschaltet, daß Hydraulikmedium unter Druck in den Druckraum 71 mündet. Die beiden anderen Magnetventile 65 und 66 bleiben in der gezeichneten Stellung. Dadurch wird der Kolben 25' ausgefahren, wodurch der Getriebehebel 6 geschwenkt wird. Der Kolben 25 wird durch den Kugelkopf 40 des Gelenkhebels 6 entsprechend zurückgefahren. Aufgrund der beschriebenen Flächenverhältnisse bleibt der Hilfskolben 69 in seiner dargestellten Anschlagstellung.

Soll der Getriebehebel 6 im Uhrzeigersinn geschwenkt werden, wird das Magnetventil 72 auf Stellung a geschaltet, während das Magnetventil 65 auf Stellung b geschaltet wird, so daß das unter Druck stehende Hydraulikmedium in den Druckraum 67 der Stelleinheit 16 strömen kann. Dadurch wird der Kolben 25 ausgefahren, der über den Kugelkopf 40 den Getriebehebel 6 schwenkt. Da der Druckraum 71 infolge des auf Stellung a umgeschalteten Magnetventils 72 mit dem Tank verbunden ist, wird der Kolben 25' bis auf Anschlag am Boden 70 des Hilfskolbens 69 zurückgefahren.

Bei der dargestellten Ausführungsform hat das Getriebe vier Gassen, so daß der Getriebehebel 6 noch in die Gasse G_{IV} geschwenkt werden kann, in welcher der Rückwärtsgang R liegt. Wird der Getriebehebel 6 in die Gasse G_{III} geschwenkt, wie zuvor beschrieben, liegt der Kolben 25' in der Endstellung am Boden 70 des Hilfskolbens 69 an. Der Hilfskolben 69 selbst steht unter dem Druck des Hydraulikmediums im Druckraum 68, so daß er nicht verschoben werden kann. Um den Rückwärtsgang R einlegen zu können, muß nunmehr das Magnetventil 66 in Stellung b so umgeschaltet werden, daß der Druckraum 68 mit dem Tank verbunden wird. Das Magnetventil 65 ist weiterhin so geschaltet (Stellung b), daß Hydraulikmedium unter Druck in den Druckraum 67 strömen kann. Das Magnetventil 72 bleibt weiterhin so geschaltet (Stellung a), daß der Druckraum 71 ebenfalls mit dem Tank verbunden ist. Dadurch wird erreicht, daß nunmehr der Hilfskolben 69 über der Kolben 25' verschoben wird, bis der Boden 70 des Hilfskolbens 69 am Boden des Zylindergehäuses 27' anschlägt. Dann ist die Gasse G_{IV} erreicht.

Soll der Getriebehebel 6 aus der Gasse G_{IV} in die Gasse G_{III} zurückgeschwenkt werden, wird das Magnetventil 66 in Stellung a geschaltet, während das Magnetventil 65 in der Stellung b und das Magnetventil 72 in der Stellung a verbleiben. Dadurch wird der Hilfskolben 69 zusammen mit dem an seinem Boden 70 anliegenden Kolben 25' so weit verschoben, bis der Hilfskolben 69 am gehäuseseitigen Anschlag 73 anschlägt. Über den Kugelkopf 40 des Getriebehebels 6 wird der Kolben 25 entsprechend zurückgeschoben.

Soll der Getriebehebel 6 aus der Gasse G_{IV} unmittelbar in die Gasse G_{I} geschwenkt werden, dann wird das Magnetventil 65 in Stellung a geschaltet, so daß der Druckraum 67 mit dem Tank verbunden ist. Das Magnetventil 66 wird in Stellung a geschaltet, so daß der Druckraum 68 mit dem Systemdruck beaufschlagt werden kann. Außerdem wird das Magnetventil 72 in Stellung b geschaltet, so daß auch der Druckraum 71 mit Hydraulikmedium beaufschlagt werden kann. Auf diese Weise werden der Hilfskolben 69 und der Kolben 25' in Fig. 8 nach links verschoben, bis der Kolben 25 durch den Kugelkopf 40 in seine Anschlagstellung am Boden des Druckraumes 67 zurückgeschoben worden ist. Die Bewegung des Hilfskolbens 69 endet, wenn er am Anschlag 73 zur Anlage kommt. Dann wird nur noch der Kolben 25' relativ zum Hilfskolben 69 verschoben, bis der Kolben 25 der Stelleinheit 16 die beschriebene Anschlagstellung erreicht hat.

Um den Getriebehebel 6 aus der Gasse G_{I} in die Gasse G_{II} zu verschwenken, wird das Magnetventil 72 in Stellung b geschaltet. Auch das Magnetventil 65 wird in Stellung b geschaltet. Somit werden beide Druckräume 67 und 71 mit Hydraulikdruck beaufschlagt. Da die vom Hydraulikmedium beaufschlagten Flächen der beiden Kolben 25, 25' gleich groß sind, wird durch den vorgespannten Bolzen 14 der Getriebehebel 6 in die Neutralstellung (Gasse G_{II}) zurückgeschoben. Hierbei bewegen sich die beiden Kolben 25, 25' als Einheit, da sie jeweils mit dem gleichen Druck beaufschlagt sind. Sobald der Bolzen 14 die in Fig. 8 dargestellte Anschlagstellung erreicht hat, nimmt der Getriebehebel 6 die Neutralstellung ein. Während dieses Zurückschwenkens des Getriebehebels 6 ist das Magnetventil 66 in Stellung a geschaltet, so daß der Hilfskolben 69 in seiner gezeichneten Anschlagstellung stehen bleibt.

Befindet sich der Getriebehebel 6 in der Gasse G_{III}, dann erfolgt die Verstellung in die Gasse G_{II} in entsprechend umgekehrter Weise, indem beide Kolben 25, 25' auf Druck geschaltet sind. In diesem Falle wird der Getriebehebel 6 durch den vorgespannten Bolzen 13 in die Neutralstellung (Gasse G_{II}) zurückgeschwenkt, wobei die beiden Kolben 25, 25' als Einheit verschoben werden. Die Neutralstellung ist erreicht, wenn der Bolzen 13 seine in Fig. 8 gezeichnete Anschlagstellung erreicht hat. Auch während dieses Verschiebevorganges bleibt der Hilfskolben 69 in seiner Anschlagstellung, da das Magnetventil 66 in Stellung a geschaltet ist.

Wenn das Getriebe lediglich drei Gassen hat, dann ist der Hilfskolben nicht erforderlich, wie Fig. 7 zeigt. In diesem Falle reichen die beiden Kolben 25, 25' aus, um den Getriebehebel 6 in die verschiedenen Gassen G_{I} bis. G_{III} zu verstellen.

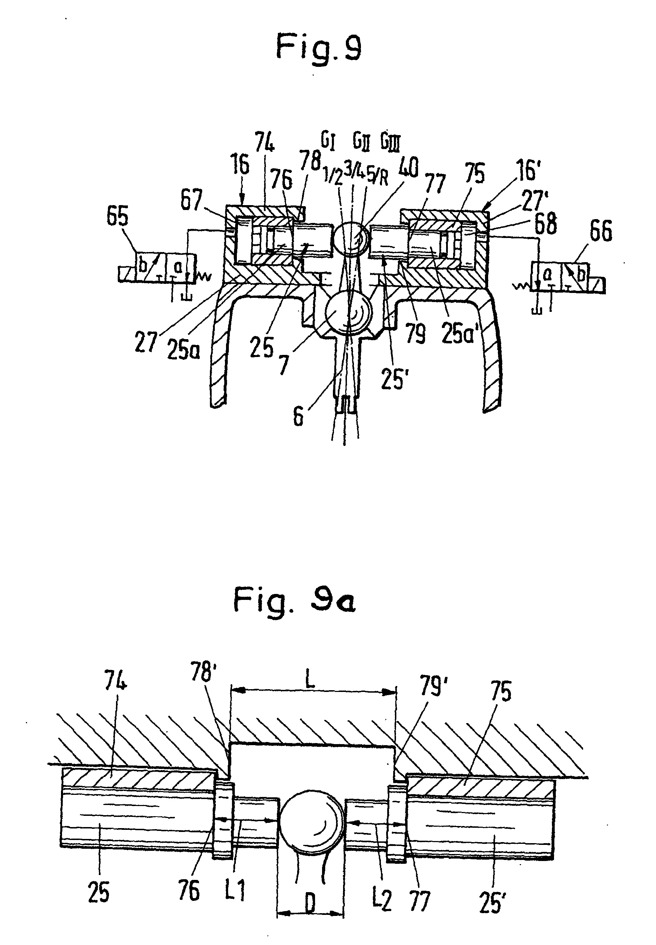

Fig. 9 zeigt eine weiter vereinfachte Ausführungsform von Stelleinheiten 16, 16'. Zur Zentrierung des Getriebehebels 6 in der Neutralstellung werden keine zusätzlichen Zentrierbolzen 13, 14 mit entsprechenden Druckfedern 63, 64 benötigt. Vielmehr wird der Getriebehebel 6 hydraulisch-mechanisch in der Gasse G_{II} zentriert. Am Kugelkopf 40 des Getriebehebels 6 liegen die beiden Kolben 25, 25' der Stelleinheiten 16, 16' an. Die Druckräume 67, 68 sind mit den Magnetventilen 65, 66 verbunden, die wie bei den vorigen Ausführungsbeispielen Schaltventile sind. Die beiden Kolben 25, 25' sind in Buchsen 74, 75 gelagert, die ihrerseits verschieblich in den Zylindergehäusen 27, 27' der Stelleinheiten 16, 16' angeordnet sind. Der Kolben 25, 25' ragt mit einem im Durchmesser verringerten Abschnitt 25a, 25a' in die Buchse 74, 75. Am Übergang vom Kolbenabschnitt 25a, 25a' in den im Durchmesser größeren Kolbenabschnitt wird eine radiale Ringschulter 76, 77 gebildet, mit welcher die Kolben an der einen Stirnseite der Buchse 74, 75 anliegen. Das freie Ende des Kolbenabschnittes 25a, 25a' liegt in einer Ebene mit den jeweiligen Stirnseiten der Buchsen 74, 75. In der in Fig. 9 dargestellten Neutralstellung des Getriebehebels 6 liegen die Buchsen 74, 75 an einem gehäusefesten Anschlag 78, 79 der Zylindergehäuse 27, 27' der Stelleinheiten 16, 16' an.

Die Kolben 25, 25' ragen aus den Zylindergehäusen 27, 27' und liegen am Kugelkopf 40 des Getriebehebels 6 an. Soll der Getriebehebel 6 aus der gezeichneten Neutralstellung in die Gasse G_{I} geschwenkt werden, wird das Magnetventil 66 in Stellung b geschaltet, so daß Hydraulikmedium unter Druck in den Druckraum 68 strömen kann. Es beaufschlagt nicht nur die Buchse 75 an ihrer ringförmigen Stirnseite, sondern auch den im Durchmesser kleineren Kolbenabschnitt 25a'. Das Magnetventil 65 bleibt in Stellung a, in welcher der Druckraum 67 mit dem Tank verbunden ist. Der Kolben 25' wird relativ zur am Anschlag 79 anliegenden Buchse 75 verschoben, wodurch der Getriebehebel 6 entgegen dem Uhrzeigersinn um die Kugel 7 geschwenkt wird. Der Kolben 25 wird hierbei bis auf Anschlag am Boden des Druckraumes 67 zurückgeschoben, wobei er über seine Ringschulter 76 die Buchse 74 mitnimmt.

Soll umgekehrt der Getriebehebel 6 aus der Neutralstellung in die Gasse G_{II} geschwenkt werden, wird das Magnetventil 66 in Stellung a und das Magnetventil 65 in Stellung b geschaltet, so daß Hydraulikmedium unter Druck in den Druckraum 67 strömen kann. Befindet sich bei diesem Umschalten des Magnetventils 65 der Getriebehebel 6 in der gezeichneten Neutralstellung, wird der Kolben 25 ausgefahren, während die Buchse 74 unter Druckbelastung am Anschlag 78 anliegt. Nunmehr wird der Kolben 25' bis auf Anschlag am Boden des Druckraumes 68 zurückgeschoben, wobei er über seine Ringschulter 77 auch die Buchse 75 mitnimmt.

Die mit dem Hydraulikmedium beaufschlagbaren Stirnflächen der beiden Kolben 25, 25' sind gleich groß. Auch die mit dem Hydraulikmedium beaufschlagbaren Ringflächen der beiden Buchsen 74, 75 sind gleich groß. Soll der Getriebehebel 6 aus der Gasse G_{I} wieder in die Neutralstellung zurückgeschwenkt werden, wird das Magnetventil 65 in die Stellung b umgeschaltet, während das Magnetventil 66 in der Stellung b verbleibt. Die Buchse 75 liegt am gehäuseseitigen Anschlag 79 an. Das in den Druckraum 67 strömende Hydraulikmedium beaufschlagt die Gesamtfläche von Buchse 74 und Kolben 25, während in der Stelleinheit 16' als hydraulische Gegenkraft lediglich die auf die Fläche des Kolbens 25' wirkende Hydraulikkraft wirkt. Da diese Fläche geringer ist als die aus der Ringfläche der Buchse 74 und der Fläche des Kolbens 25 gebildete beaufschlagte Fläche, werden die Buchse 74 und der Kolben 25 in Fig. 9 nach rechts verschoben, wodurch der Getriebehebel 6 in die Neutralstellung G_{II} im Uhrzeigersinn verschwenkt wird. Dabei wird der Kolben 25' relativ zur Buchse 75 zurückgeschoben, bis er mit seiner Ringschulter 77 an der Stirnseite der Buchse 75 anliegt. Sobald diese Anschlagstellung erreicht ist, sind die in den beiden Druckräumen 67 und 68 beaufschlagten Flächen von Buchse und Kolben gleich groß, wodurch die hydraulische Zentrierung des Getriebehebels 6 in der Mittelstellung gewährleistet ist.

Soll der Getriebehebel 6 aus der Gassenstellung G_{III} in die Neutralstellung zurückgeschwenkt werden, wird das Magnetventil 66 in die Stellung b umgeschaltet, während das Magnetventil 65 in seiner Stellung b verbleibt. Nunmehr wird in spiegelbildlicher Weise die Neutralstellung des Getriebehebels 6 von der anderen Seite aus angefahren. Sobald der Kolben 25 mit seiner Ringschulter 76 an der Buchse 74 anschlägt, ist wieder die Stellung gemäß Fig. 9 erreicht, in der die beiden mit Hydraulikmedium beaufschlagten Flächen der Druckräume 67 und 68 gleich groß sind.

Die beschriebene hydraulische Zentrierung des Getriebehebels 6 in der Neutralstellung wird dann optimal erreicht, wenn die Bedingung L = l₁ + D + l₂ gegeben ist. Mit D ist der Durchmesser des Kugelkopfes 40, mit L der Abstand zwischen den beiden Anlageflächen 78', 79' für die Buchsen 74, 75 und mit l₁ bzw. l₂ der Abstand der Stirnseiten der Kolben 25, 25' von der zugehörigen Ringschulter 76, 77 bezeichnet. Ist die oben genannte Bedingung erfüllt, dann liegen in der Neutralstellung des Getriebehebels 6 die Kolben 25, 25' mit ihren Stirnseiten am Kugelkopf 40 an, während die Ringschultern 76, 77 der Kolben 25, 25' jeweils in einer Ebene mit den Anschlagflächen 78', 79' für die Buchsen 74, 75 liegen.

Aufgrund von Fertigungstoleranzen sind zwei Fälle zu unterscheiden. Im einen Fall ist die Bedingung L > l₁ + D + l₂ und im anderen Fall die Bedingung L < l₁ + D + l₂ gegeben.

Im ersten Fall liegen die Kolben 25, 25' unter dem Hydraulikdruck am Kugelkopf 40 an, während ihre Ringschultern 76, 77 geringen Abstand von den Stirnseiten der Buchsen 74, 75 haben, die unter dem Hydraulikdruck an den gehäusefesten Anschlagflächen 78', 79' anliegen. Durch diesen Abstand zwischen den Ringschultern 76, 77 von den Stirnseiten der Buchsen 74, 75 ist das geschilderte Spiel gegeben, um welches der Getriebehebel 6 aus der idealen Neutralstellung unter Einwirkung äußerer Kräfte wandern kann.

Im anderen Fall ist der Abstand L zwischen den Anschlagflächen 78', 79' für die Buchsen 74, 75 kleiner als die Summe aus Durchmesser D des Kugelkopfes 40 und des Abstandes l₁, l₂ der Kolbenstirnseite von der zugehörigen Ringschulter 76, 77. Da die Kolben 25, 25' unter dem Hydraulikdruck am Kugelkopf 40 anliegen und die Buchsen 74, 75 unter dem Hydraulikdruck in Richtung zueinander belastet sind, können aufgrund dieser Toleranz die Buchsen 74, 75 nicht mehr an den gehäuseseitigen Anschlagflächen 78', 79' zur Anlage kommen, sondern bleiben in Anlage an den Ringschultern 76, 77 der Kolben 25, 25'. Nunmehr kann die gesamte Einheit aus Buchsen 74, 75, Kolben 25, 25' und Kugelkopf 40 um dieses Toleranzmaß verschoben werden, bis die jeweilige Buchse 74, 75 an der gehäusefesten Anschlagfläche 78', 79' zur Anlage kommt. Dieses Toleranzmaß ergibt sich aus der Differenz zwischen der Summe l₁ + D + l₂, die in den geschilderten drei Beispielen als konstant angenommen worden ist, und der tatsächlichen Größe des Maßes L, die im geschilderten letzten Fall kleiner ist als das Sollmaß L.

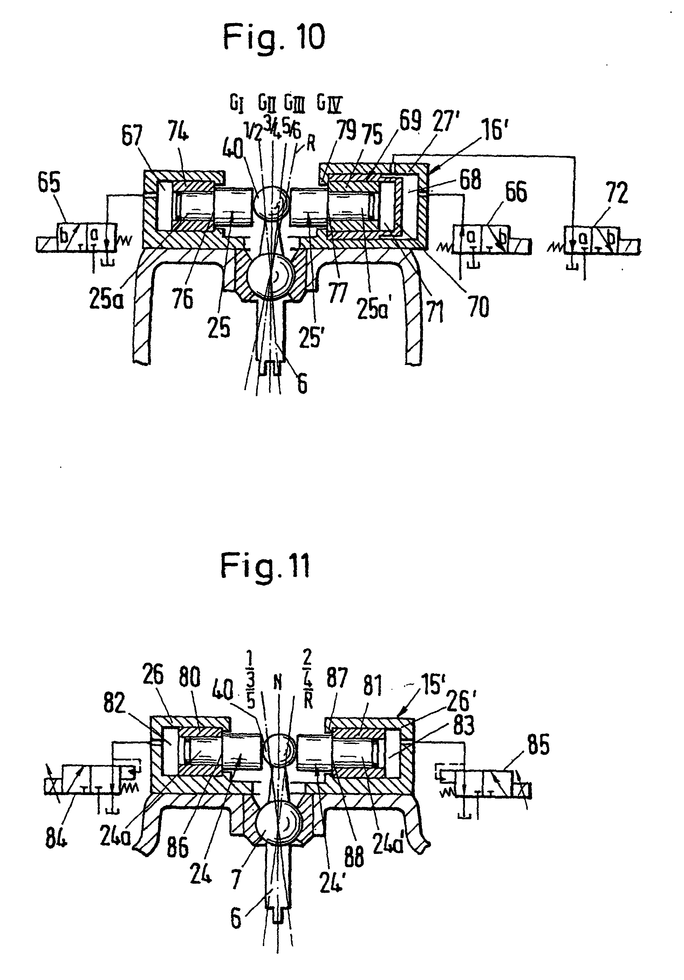

Fig. 10 zeigt die Verhältnisse bei einem Sechsganggetriebe, bei dem der Getriebehebel 6 in vier verschiedene Gassen G_{I} bis G_{IV} verschwenkt werden kann. Um den Getriebehebel 6 in die vierte Gasse G_{IV} schwenken zu können, ist wiederum der Hilfskolben 69 vorgesehen, in dem die Buchse 75 verschiebbar gelagert ist. Der Druckraum 68 der Stelleinheit 16' ist mit dem Magnetventil 66 verbunden. Der im Hilfskolben 69 liegende Druckraum 71 ist mit dem Magnetventil 72 verbunden.

In der gezeichneten Neutralstellung sind die Ventile 65 und 72 so geschaltet, daß die Druckräume 67 und 71 mit dem Tank verbunden sind. Das Magnetventil 66 ist so geschaltet, daß der Druckraum 68 zwischen dem Boden 70 des Hilfskolbens 69 und dem Boden des Zylindergehäuses 27' unter Druck steht. Dadurch wird der Hilfskolben 69 gegen den Anschlag 79 gedrückt, an dem in der Neutralstellung des Getriebehebels 6 auch die Buchse 75 anliegt.

Soll der Getriebehebel 6 entgegen Uhrzeigersinn aus der Neutralstellung in die Gasse G_{I} geschwenkt werden, wird das Magnetventil 72 in Stellung b geschaltet, so daß Hydraulikmedium unter Druck in den Druckraum 71 strömen kann. Dadurch wird der Kolben 25' ausgefahren. Der Hilfskolben 69 bleibt weiterhin in Anschlagstellung am gehäusefesten Anschlag 79. Über den Kolben 25' wird der Getriebehebel 6 in der beschriebenen Weise entgegen dem Uhrzeigersinn in die Gasse G_{I} geschwenkt, wobei der Kolben 25 zusammen mit der Buchse 74 zurückgeschoben wird. Das Magnetventil 65 ist hierbei in Stellung a und das Magnetventil 66 in Stellung b geschaltet.

Um den Getriebehebel 6 aus der Mittelstellung (Gasse G_{II}) in die Gasse G_{III} zu verschwenken, wird das Magnetventil 65 in Stellung b geschaltet, so daß das Hydraulikmedium unter Druck in den Druckraum 67 strömen kann. Das Magnetventil 72 bleibt in Stellung a, so daß das Hydraulikmedium im Druckraum 71 beim Zurückschieben des Kolbens 25' in den Tank strömen kann. Der Kolben 25 wird unter dem Druck des Hydraulikmediums ausgefahren, wobei der Getriebehebel 6 im Uhrzeigersinn geschwenkt wird. Der Kolben 25' wird zurückgeschoben, wobei er über seine Ringschulter 77 die Buchse 75 mitnimmt. Der Hilfskolben 69 wird hierbei nicht verschoben, da er unter dem Druck des im Druckraum 68 befindlichen Hydraulikmediums steht, da das Magnetventil 66 in Stellung a ist.

Soll der Getriebehebel 6 in die Gasse G_{IV} (Rückwärtsgang R) verschwenkt werden, wird das Magnetventil 66 in Stellung b geschaltet, so daß der Druckraum 68 mit dem Tank verbunden wird. Das Magnetventil 72 bleibt in Stellung a, so daß der Druckraum 71 mit dem Tank verbunden ist. Das Magnetventil 65 ist in Stellung b geschaltet, so daß das Hydraulikmedium unter Druck in den Druckraum 67 strömt. Dadurch wird der Kolben 25 weiter ausgefahren, wobei er den Getriebehebel 6 in die Gasse G_{IV} schwenkt. Hierbei wird der Hilfskolben 69 durch die Buchse 75 und den Kolben 25' so weit verschoben, bis der Hilfskolben 69 mit seinem Boden 70 am Boden des Zylindergehäuses 27' anschlägt.

Wie bei der vorigen Ausführungsform liegen die im Durchmesser verringerten Kolbenabschnitte 25a, 25a' an der Innenwandung der jeweiligen Buchse 74, 75 an.

Um den Getriebehebel 6 aus der Gasse G_{IV} in die Gasse G_{I} zurückzuschwenken, wird das Magnetventil 66 in Stellung a geschaltet. Das Magnetventil 72 wird in die Stellung b geschaltet, während das Magnetvenil 65 in die Stellung a geschaltet wird. Dadurch werden der Hilfskolben 69, die Buchse 75 und der Kolben 25' in einem Zuge verschoben. Sobald der Hilfskolben 69 am Anschlag 79 zur Anlage kommt, werden lediglich noch die Buchse 75 und der Kolben 25' verschoben, bis auch die Buchse 75 am Anschlag 79 anschlägt. Dann wird noch der Kolben 25' so weit verschoben, bis über den Kugelkopf 40 des Getriebehebels 6 der Kolben 25 und über seine Ringschulter 76 die Buchse 74 am Boden des Druckraumes 67 zur Anlage kommen.

Es ist auch möglich, die Magnetventile 66 und 72 zeitlich nacheinander so zu schalten, daß zunächst lediglich die Buchse 75 und der Kolben 25' verschoben werden, während der Hilfskolben 69 mit seinem Boden 70 noch am Boden des Druckraumes 68 in Anlage bleibt. In diesem Falle bleibt zunächst das Magnetventil 66 in seiner Stellung b, während das Magnetventil 72 in Stellung b geschaltet wird. Wenn die Buchse 75 am Anschlag 79 zur Anlage kommt, wird lediglich noch der Kolben 25' so weit verschoben, bis über den Kugelkopf 40 die Buchse 74 und der Kolben 25 am Boden des Druckraumes 67 anliegen. Dann erst wird das Magnetventil 66 in die Stellung a umgeschaltet, so daß anschließend der Hilfskolben 69 nachgefahren wird, bis er am Anschlag 79 zur Anlage kommt.

Soll der Getriebehebel 6 aus der Gasse G_{I} in die Neutralstellung (Gasse G_{II}) zurückgeschwenkt werden, wird das Magnetventil 65 in die Stellung b geschaltet. Das Magnetventil 72 wird in Stellung a geschaltet, während das Magnetventil 66 in Stellung a verbleibt. Dadurch werden die Buchse 74 und der Kolben 25 in Fig. 10 nach rechts verschoben, wobei der Kolben 25' und über dessen Ringschulter 77 die Buchse 75 so weit verschoben werden, bis sie am Boden 70 des Hilfskolbens 69 zur Anlage kommen. Er selbst wird durch das unter Druck stehende Hydraulikmedium im Druckraum 68 in Anlage am gehäusefesten Anschlag 79 gehalten.

In der angefahrenen Gasse können dann mit den entsprechenden Stelleinheiten die gewünschten Gänge eingelegt werden. Bei den Getrieben mit drei Gassen (Fig. 7 und 9) können in der Gasse G_{I} die Gänge 1 und 2, in der Gasse G_{II} die Gänge 3 und 4 und in der Gasse G_{III} der fünfte Gang und der Rückwärtsgang eingelegt werden. Bei Getrieben mit vier Gassen (Fig. 8 und 10) wird in der dritten Gasse G_{III} der fünfte und sechste Gang eingelegt, während der Rückwärtsgang in der vierten Gasse G_{IV} liegt. Je nach Ausbildung des Getriebes kann die Gasse G_{IV} auch neben der Gasse G_{I} liegen.

Fig. 11 zeigt die Stelleinheiten 15, 15', mit denen der Getriebehebel 6 zum Einlegen der jeweiligen Gänge verschwenkt wird. Die Stelleinheiten 15, 15' liegen rechtwinklig zu den Stelleinheiten 16, 16', wie Fig. 7 zeigt. Die in Fig. 11 dargestellten Stelleinheiten 15, 15' sind gleich ausgebildet wie die Stelleinheiten 16, 16' gemäß Fig. 9 zur Gassenwahl. Die Kolben 24, 24' haben die im Durchmesser kleineren Kolbenabschnitte 24a, 24a', die an der Innenwandung der Buchsen 80, 81 anliegen. Sie liegen ihrerseits an der Innenwandung der Zylindergehäuse 26, 26' an. Die Buchsen 80, 81 sind gleich ausgebildet wie die Buchsen 74, 75. Auch die Kolben 24, 24' haben gleiche Ausbildung wie die Kolben 25, 25'. An die Druckräume 82, 83 der Zylindergehäuse 26, 26' sind Proportionalmagnetventile 84 und 85 mit Druckrückführung angeschlossen. Der Getriebehebel 6 wird in der gezeichneten Neutralstellung hydraulisch zentriert. Die beiden Magnetventile 84, 85 sind jeweils so bestromt, daß die Druckräume 82, 83 mit dem Tank verbunden sind, so daß der Getriebehebel 6 zunächst mit den Stelleinheiten 16, 16' in der beschriebenen Weise in die gewünschte Gasse geschwenkt werden kann. Soll der Getriebehebel 6 entgegen dem Uhrzeigersinn in Fig. 11 aus der Neutralstellung verschwenkt werden, um je nach Gassenwahl den ersten, den dritten oder den fünften Gang einzulegen, wird das Magnetventil 85 so bestromt, daß das Hydraulikmedium unter Druck in den Druckraum 83 strömt. Dadurch wird der Kolben 24' ausgefahren, wodurch der Getriebehebel 6 entgegen dem Uhrzeigersinn um die Kugel 7 geschwenkt wird. Der Kolben 24 wird zurückgeschoben. Über die Ringschulter 86 wird die Buchse 80 mitgenommen. Die Buchse 81 liegt am gehäusefesten Anschlag 87 an, so daß sie auch bei Druckbeaufschlagung des Hydraulikmediums im Druckraum 83 nicht weiter verschoben werden kann.

Soll umgekehrt der Getriebehebel 6 aus der Neutralstellung N im Uhrzeigersinn verschwenkt werden, um in der ausgewählten Gasse den zweiten, den vierten oder den Rückwärtsgang einzulegen, wird das Magnetventil 84 so bestromt, daß das Hydraulikmedium unter Druck in den Druckraum 82 strömt. Dadurch wird der Kolben 24 ausgefahren, wodurch der Getriebehebel 6 im Uhrzeigersinn geschwenkt wird. Der Kolben 24' wird dadurch zurückgeschoben, wobei er über die Ringschulter 88 die Buchse 81 mitnimmt. Da das Magnetventil 85 so bestromt ist, daß der Druckraum 83 mit dem Tank verbunden ist, kann das Hydraulikmedium, wie auch bei den zuvor beschriebenen Ausführungsbeispielen, aus dem Druckraum 83 verdrängt werden. Die unter Druck stehende Buchse 80 liegt am gehäusefesten Anschlag 89 an.

Während für die Gassenwahl nur geringe Kräfte zum Verschwenken des Getriebehebels notwendig sind, sind beim Gangeinlegen wesentlich höhere Kräfte erforderlich. Werden die Kolben 24, 24' in der beschriebenen Weise verschoben und der Getriebehebel 6 entsprechend verschwenkt, werden zunächst (nicht dargestellte) Synchronisierringe des Getriebes in bekannter Weise in Richtung zueinander verschoben, bis sie aneinander liegen. Für diese Anstellbewegung ist noch eine verhältnismäßig geringe Kraft erforderlich. Sobald die Synchronisierringe jedoch aneinander liegen, muß der Druck in den jeweiligen Druckräumen 82 bzw. 83 kontinuierlich hochgefahren werden, bis der Drehzahlausgleich in der Synchronisiereinrichtung in bekannter Weise stattgefunden hat. Während dieses Druckaufbaus bleiben die Kolben 24, 24' nahezu stehen. Erst wenn die Synchronisierung erreicht ist, erfolgt dann die restliche Verschiebebewegung des jeweiligen Kolbens 24, 24' bei entsprechend geringerem Druck, bis der Formschluß zwischen den miteinander zu kuppelnden Getriebeelementen erreicht ist.

Soll der Getriebehebel 6 aus der verschwenkten Stellung in die Neutralstellung zurückgeschwenkt werden, dann wird der jeweils gegenüberliegende Druckraum 82 bzw. 83 druckgleich belastet, um den Getriebehebel 6 in der anhand von Fig. 9 beschriebenen Weise in der Mittelstellung hydraulisch zu zentrieren. Auch bei dieser Ausführungsform wird der Getriebehebel 6 in der Neutralstellung N hydraulisch-mechanisch zentriert. Dies wird durch die beschriebene und insbesondere auch zeichnerisch dargestellte Ausbildung und Anordnung der Buchsen 80, 81 und der Kolben 24, 24' erreicht. Die jeweils mit dem Hydraulikmedium druckgleich beaufschlagten Stirnflächen der Buchsen 80, 81 sowie der Kolben 24, 24' sind wiederum so gewählt, daß der Getriebehebel 6 in seiner Mittelstellung zentriert gehalten wird. In bezug auf diese Zentrierung wird auf die Ausführungen zur Ausführungsform gemäß Fig. 9 verwiesen.

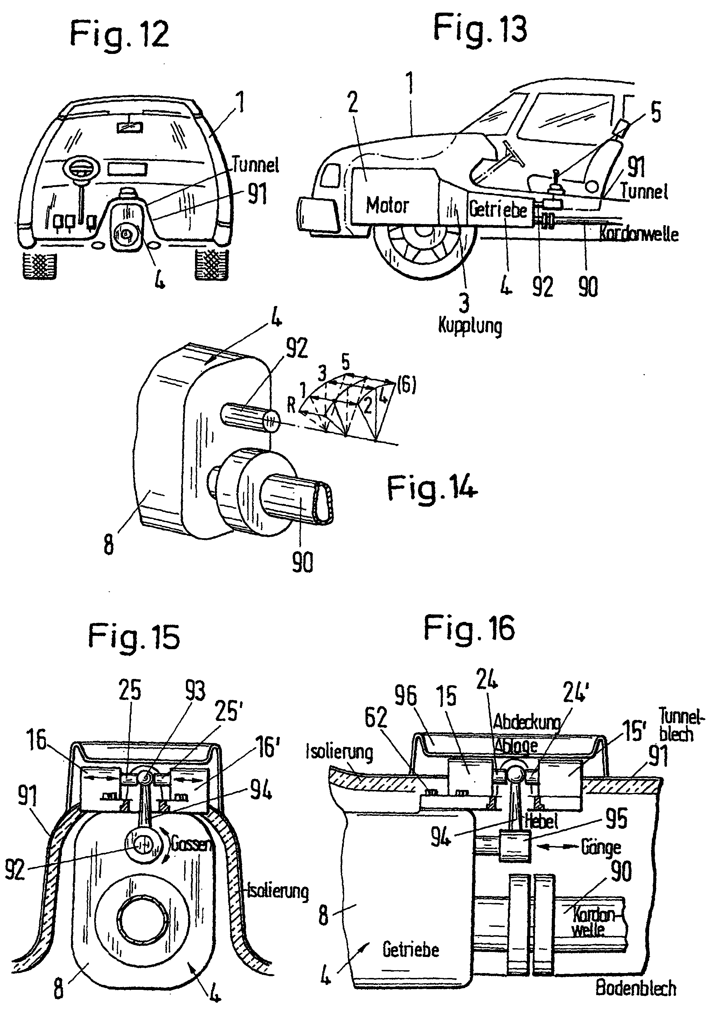

Fig. 12 zeigt ein Kraftfahrzeug 1, das einen über der Vorderachse sitzenden Motor 2 hat, an den in Fahrtrichtung nach hinten die Kupplung 3 und das Getriebe 4 anschließen. Vom Getriebe 4 verläuft, wie auch Fig. 1 zeigt, eine Kardanwelle 90 nach hinten. Im Unterschied zum Fahrzeug nach Fig. 1 ist das Getriebe in einem Tunnel 91 untergebracht, der als Bodenerhöhung im Kraftfahrzeug vorgesehen ist. Während bei der Ausführung gemaß Fig. 1 der Schalthebel 5 unmittelbar über dem Getriebe 4 sitzt, ist bei einer Fahrzeugausbildung entsprechend den Fig. 12 und 13 der Hebel 5 in Fahrtrichtung mit Abstand hinter dem Getriebe 4 angeordnet. Der Schalthebel 5 ragt nach oben aus dem Tunnel 91.

In Fig. 14 sind die Bewegungen einer Schaltwelle 92 des Getriebes 4 anhand eines Diagrammes dargestellt. Die Schaltwelle 92 ragt aus dem Getriebegehäuse 8 und wird mittels des Schalthebels 5 sowohl um ihre Achse gedreht als auch in ihrer Achse verschoben. Durch Drehen der Schaltwelle 92 wird die jeweilige Gasse gewählt. Innerhalb der ausgewählten Gasse wird dann die Schaltwelle 92 in der gewünschten Richtung axial verschoben, um die jeweiligen Gänge einzulegen.

Der Schalthebel 5 wird durch eine Stelleinrichtung ersetzt, mit welcher die Schaltwelle 92 in der gewünschten Richtung gedreht und axial verschoben wird.

Die Fig. 15 und 16 zeigen eine Stelleinrichtung entsprechend Fig. 6, welche aus den rechtwinklig zueinander angeordneten Stelleinheiten 15, 15', 16, 16' besteht. Die Stelleinheiten sind über die gemeinsame Grundplatte 62 auf dem Getriebegehäuse 8 befestigt. Die Stelleinheiten 15, 15', 16, 16' können eine Ausbildung entsprechend den Fig. 7 bis 11 haben.

Mit den Stelleinheiten 16, 16' (Fig. 15) wird die Gasse angefahren, während mit den Stelleinheiten 15, 15' in der angefahrenen Gasse der gewünschte Gang eingelegt wird.

Die Kolben 24, 24', 25, 25' der Stelleinheiten 15, 15', 16, 16' liegen an einem Kugelkopf 93 eines einarmigen Schalthebels 94 an, der drehfest und axial unverschieblich auf der Schaltwelle 92 sitzt. Durch Ein- und Ausfahren der Kolben 25, 25' wird der Schalthebel 94 für die Gassenwahl in der gewünschten Richtung geschwenkt, wobei die Schaltwelle 92 entsprechend gedreht wird.

Durch Ein- und Ausfahren der Kolben 24, 24' der Stelleinheiten 15, 15' wird der Schalthebel 94 und damit die Schaltwelle 92 innerhalb der angefahrenen Gasse axial verschoben, um den gewünschten Gang einzulegen. Die Funktionsweise der Stelleinheiten ist anhand der Fig. 7 bis 11 im einzelnen beschrieben worden.

Der Schalthebel 94 sitzt vorteilhaft mit einem Ring 95 auf der Schaltwelle 92. Die Stelleinrichtung mit den vier Stelleinheiten ist im Bereich unterhalb einer Ablage 96 untergebracht, die üblicherweise auf dem Tunnel 91 neben dem Fahrer in Kraftfahrzeugen vorgesehen ist. Die Stelleinrichtung läßt sich infolge ihrer kompakten Ausbildung in diesem Bereich einfach unterbringen, wobei sie nach Abnahme der Ablage 96 einfach zugänglich ist.

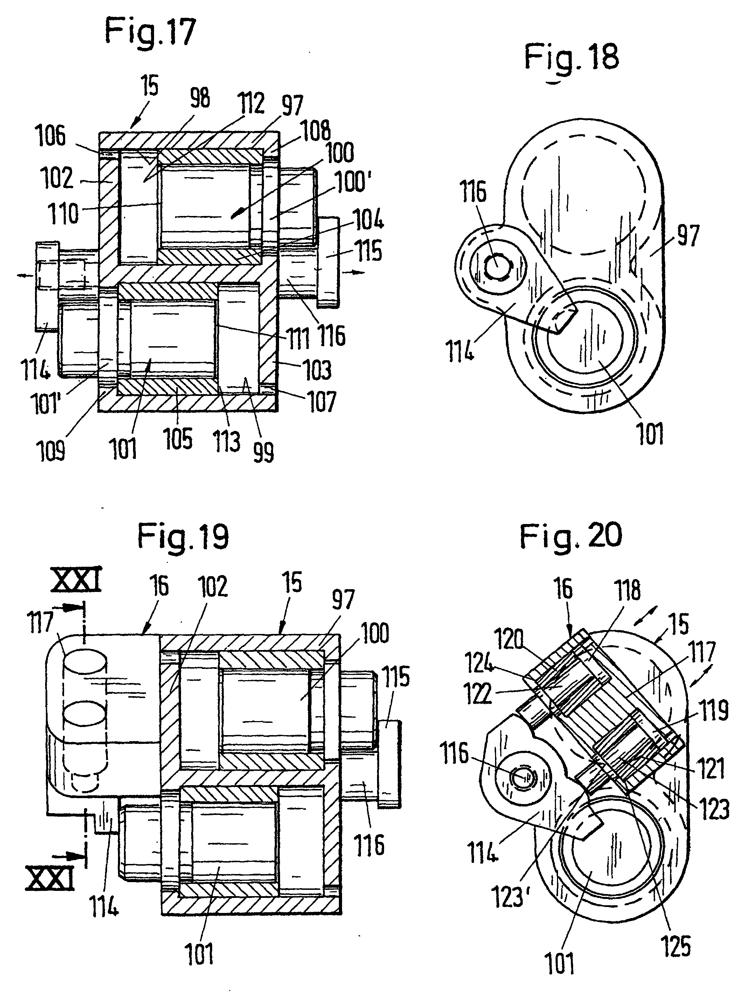

Die Fig. 17 und 18 zeigen eine weitere Ausführungsform einer Stelleinheit 15, mit der die Gänge eingelegt werden können. Die Stelleinheit zeichnet sich durch eine kompakte Ausbildung und insbesondere durch eine minimierte Baulänge und minimierte Durchmesser aus. Die Stelleinheit 15 hat ein Gehäuse 97 mit zwei achsparallel zueinander liegenden Kammern 98, 99, in denen jeweils ein Kolben 100, 101 verschiebbar gelagert ist. Beide Kolben 100, 101 ragen entgegengesetzt zueinander über die jeweiligen Stirnseiten 102, 103 des Gehäuses 97. Innerhalb der zylindrischen Kammern 98, 99 ist jeweils eine Buchse 104, 105 untergebracht, die an der Zylinderwandung anliegt und innerhalb der Kammern verschiebbar ist. Die Buchsen 104, 105 sitzen auf den Kolben 100, 101, die relativ zu den Buchsen 104, 105 axial verschiebbar sind.

Die Kammern 98, 99 sind über Bohrungen 106, 107 mit Magnetventilen verbunden, wie dies anhand der Fig. 7 bis 11 beschrieben worden ist.

In Fig. 17 ist die Mittelstellung der Kolben 100, 101 dargestellt. In dieser Stellung liegen die Buchsen 104, 105 mit ihren voneinander abgewandten Stirnseiten an gehäuseseitigen Anschlägen 108, 109 an. Die inneren Stirnflächen 110, 111 der Kolben 100, 101 sind vorteilhaft gegenüber den inneren Stirnseiten 112, 113 der Buchsen 104, 105 geringfügig zurückversetzt.

Die über die Gehäusestirnseiten 102, 103 ragenden Enden der Kolben 100, 101 liegen an jeweils einer Lasche 114, 115 an, die auf einer gemeinsamen Stange 116 sitzen. Sie ist axial verschiebbar im Gehäuse 97 gelagert. Die Laschen 114, 115 stehen quer von der Stange 116 ab.

Soll die Stange 116 in Fig. 17 nach rechts verschoben werden, wird die Kammer 98 mit Hydraulikmedium beaufschlagt, während die untere Kammer 99 mit dem Tank verbunden wird. Da in der gezeichneten Mittelstellung die Buchse 104 am Anschlag 108 anliegt, wird bei Druckbeaufschlagung des Hydraulikmediums in der Kammer 98 nur noch der Kolben 100 verschoben. Er nimmt über die Lasche 115 die Stange 116 mit. Da die untere Kammer 99 druckentlastet ist, wird über die gegenüberliegende Lasche 114 der Kolben 101 mitgenommen. Über einen Bund 101' nimmt der Kolben 101 die Buchse 105 mit, bis sie an der Stirnwand 103 anschlägt. Die Stirnfläche 111 des Kolbens 101 hat dann geringen Abstand von der Stirnwand 103.

Soll die Stange 116 in Fig. 17 nach links verschoben werden, wird in die Kammer 99 Hydraulikmedium unter Druck eingebracht, während die obere Kammer 98 druckentlastet wird. Dadurch wird der untere Kolben 101 in Fig. 17 nach links verschoben, wobei er über die Lasche 114 die Stange 116 mitnimmt. Die am anderen Ende der Stange vorgesehene Lasche 115 nimmt ihrerseits den Kolben 100 sowie über dessen Bund 100' die Buchse 104 mit. Auf diese Weise kann die Stange 116 je nach Druckbeaufschlagung der Kammern 98 oder 99 in der gewünschten Richtung axial verschoben werden.

Die Stange 116 wird mit der Schaltwelle 92 des Schaltgetriebes 4 axial fest verbunden, so daß durch Verschieben der Stange 116 auch die Schaltwelle 92 entsprechend axial verschoben wird.

Die Fig. 19 und 20 zeigen die Stelleinheit 15 gemäß den Fig. 17 und 18, an welche eine weitere Stelleinheit 16 angebaut ist. Mit der Stelleinheit 15 wird die Stange 116, wie anhand der Fig. 17 und 18 erläutert worden ist, axial verschoben, um die jeweiligen Gänge des Getriebes 4 einzulegen. Die Stelleinheit 16 dient dazu, die jeweilige Gasse des Getriebes anzufahren.

Die Stelleinheit 16 ist an der Stirnseite 102 des Gehäuses 97 der Stelleinheit 15 befestigt. Die Stelleinheit 16 hat ein Gehäuse 117, in dem nebeneinander zwei Druckräume 118 und 119 untergebracht sind (Fig. 20). Das Gehäuse 117 kann einstückig mit dem Gehäuse 97 der Stelleinheit 15 ausgebildet sein. In den Druckräumen 118, 119 ist jeweils eine Buchse 120, 121 und ein Kolben 122, 123 verschiebbar untergebracht. Die beiden Druckräume 118, 119 liegen achsparallel zueinander. Die Buchsen 120, 121 liegen an den zylindrischen Innenwandungen der Druckräume 118, 119 an und sind in ihnen verschiebbar. Die Buchsen 120, 121 sitzen auf den Kolben 122, 123, die gegenüber den Buchsen 120, 121 verschiebbar sind. Die beiden Kolben 122, 123 ragen aus dem Gehäuse 117 und liegen an der Lasche 114 an. Die Kolben 122, 123 liegen senkrecht zur Achse der Stange 116, auf welcher die Laschen 114, 115 drehfest sitzen. Wie Fig. 20 zeigt, ist die Lasche 114 als zweiarmiger Hebel ausgebildet. Die beiden Kolben 122, 123 liegen an der Stirnseite jedes Hebelarmes der Lasche 114 beiderseits einer die Achse der Stange 116 enthaltenden Ebene. Die beiden Druckräume 118, 119 können jeweils mit Druckmedium beaufschlagt werden. Dementsprechend wird der eine oder der andere Kolben 122, 123 ausgefahren, wodurch die Lasche 114 in oder entgegen dem Uhrzeigersinn um die Achse der Stange 116 geschwenkt wird. Da die Lasche 114 drehfest auf der Stange 116 sitzt, wird die Stange 116 in entsprechendem Maße gedreht.

Soll die Lasche 114 entgegen dem Uhrzeigersinn in der Darstellung gemäß Fig. 20 geschwenkt werden, wird der Druckraum 118 mit dem Hydraulikmedium unter Druck gesetzt, während der Druckraum 119 druckentlastet wird. Da die Buchse 120 an einem gehäuseseitigen Anschlag 124 anliegt, wird lediglich der Kolben 122 verschoben. Dadurch wird die Lasche 114 um die Achse der Stange 116 entgegen dem Uhrzeigersinn geschwenkt. Der andere Kolben 123 wird dementsprechend durch die Lasche 114 zurückgeschoben.

Über den Bund 123' des Kolbens 123 wird auch die Buchse 121 zurückgeschoben, bis die Buchse am Boden des Druckraumes 119 zur Anlage kommt. Die Stirnseite des Kolbens 123 ist gegenüber der Stirnseite der Buchse 121 geringfügig zurückversetzt.

In Fig. 20 ist die Mittelstellung gezeichnet, welche der Mittelstellung gemäß Fig. 17 entspricht. In dieser Mittelstellung liegen die beiden Buchsen 120, 121 an den Anschlägen 124, 125 des Gehäuses 117 an. Ausgehend von dieser Mittelstellung wird beim Verschwenken der Lasche 114 entgegen dem Uhrzeigersinn die Buchse 121 mit dem Kolben 123 in der beschriebenen Weise zurückgeschoben, bis sie am Boden des Druckraumes 119 zur Anlage kommt.

Wird, ausgehend von der Mittelstellung gemäß Fig. 20, der Druckraum 118 druckentlastet und in den Druckraum 119 Hydraulikmedium unter Druck eingebracht, wird der Kolben 123 ausgefahren, wodurch die Lasche 114 im Uhrzeigersinn um die Achse der Stange 116 schwenkt und diese im Uhrzeigersinn dreht. Gleichzeitig wird der Kolben 122 zusammen mit der Buchse 120 zurückgeschoben, bis sie am Boden des Druckraumes 118 anschlägt. Die Stirnseite des Kolbens 122 ist ebenfalls gegenüber der Stirnseite der Buchse 120 geringfügig zurückversetzt.

Auf die beschriebene Weise kann mit der Stelleinheit 16 die jeweilige Gasse durch Drehen der Stange 116 angefahren werden. Da sie mit der Schaltwelle 92 drehfest verbunden ist, wird dadurch auch die Schaltwelle 92 im gewünschten Maße gedreht. Anschließend kann durch Betätigung der Stelleinheit 15 der jeweilige Gang der angefahrenen Gasse durch Axialverschieben der Stange 116 und damit der Schaltwelle 92 eingelegt werden. Hierbei werden die Kolben 100, 101 in der anhand der Fig. 17 und 18 beschriebenen Weise ein- bzw. ausgefahren. Da hierbei die Lasche 114 ebenfalls verschoben wird, ist sie, wie Fig. 19 zeigt, in Verschieberichtung der Stange 116 verbreitert ausgebildet, so daß gewährleistet ist, daß die Kolben 122, 123 auch bei verschobener Lasche 114 noch auf ihr aufliegen.

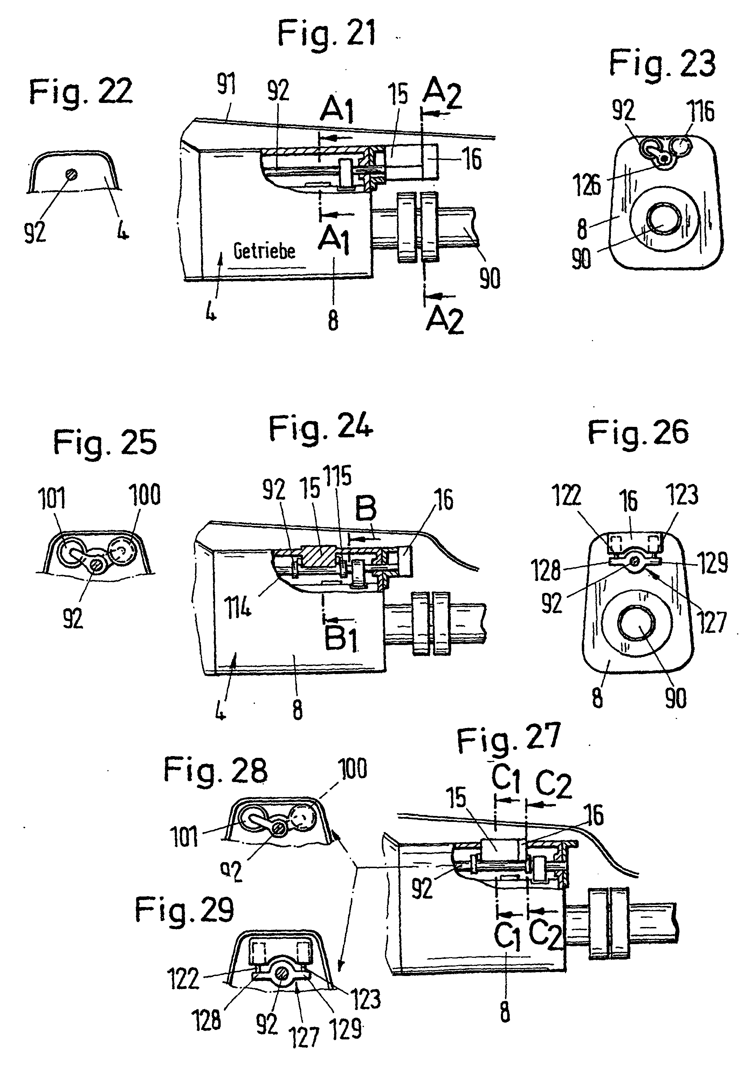

Die Fig. 21 bis 23 zeigen eine Anbaumöglichkeit der Stelleinrichtung am Getriebe 4 mit der Schaltwelle 92. Die zum Gangeinlegen vorgesehene Stelleinheit 15, die entsprechend den Fig. 17 und 18 ausgebildet ist, ist am Getriebegehäuse 8 befestigt. Die Stelleinheit 16 (Fig. 21) ist entsprechend den Fig. 19 und 20 an der Stelleinheit 15 montiert. Die (nicht dargestellte) Stange 116, die mit den beiden Stelleinheiten 15 und 16 in der anhand der Fig. 17 bis 20 beschriebenen Weise axial verschoben und gedreht wird, liegt fluchtend zur Schaltwelle 92 und ist drehfest sowie axial fest mit ihr verbunden. Wie Fig. 23 zeigt, ist die Stelleinheit 15 so eingebaut, daß eine die Achsen der beiden Kammern 98, 99 enthaltende Ebene 126 in der Einbaulage horizontal verläuft. Dadurch kann die Stelleinrichtung 15, 16, in Achsrichtung der Schaltwelle 92 gesehen, innerhalb des Umrisses des Getriebegehäuses 8 im Tunnel 91 des Fahrzeuges untergebracht werden. Wie Fig. 21 zeigt, läßt sich die Stelleinrichtung 15, 16 aufgrund der beschriebenen Anordnung und Ausbildung noch dort im Tunnel 91 einbauen, wo nur ein sehr niedriger Einbauraum, jedoch mit der erforderlichen Länge zur Verfügung steht.

Die Fig. 24 bis 26 zeigen eine Ausführung, bei der die Stelleinheit 15, mit der die Gänge eingelegt werden, innerhalb des Getriebegehäuses 8 untergebracht ist. In diesem Falle sitzen die Laschen 114, 115 drehfest und axial unverschieblich unmittelbar auf der Schaltwelle 92 des Getriebes 4, so daß die Stange 116 entfallen kann. Im übrigen ist die Stelleinheit 15 gleich ausgebildet wie die Ausführungsform nach den Fig. 17, und 18. Durch Ein- und Ausfahren der Kolben 100, 101 wird die Schaltwelle 92 im Zusammenwirken mit den Laschen 114, 115 axial verschoben.

Damit die Schaltwelle 92 um ihre Achse gedreht werden kann, sitzt auf ihr axial unverschieblich und drehfest eine Brücke 127 (Fig. 26), an deren beiden Armen 128, 129 die Kolben 122, 123 der Stelleinheit 16 angreifen. Die Stelleinheit 16 ist entsprechend der Ausführungsform nach den Fig. 19 und 21 ausgebildet. Je nachdem, welcher Kolben 122 oder 123 ausgefahren wird, wird die Schaltwelle 92 über die Brücke 127 in oder entgegen Uhrzeigersinn gedreht. Die Kolben 122, 123 liegen senkrecht zur Achse der Schaltwelle 92. Die beiden Brückenarme 128, 129 liegen diametral einander gegenüber. Sie sind so lang ausgebildet, daß sie beim Verschieben der Schaltwelle 92 mittels der Stelleinheit 15 nicht außer Eingriff mit den Kolben 122, 123 der Stelleinheit 16 kommen. Die Wirkungsweise der Stelleinheit 16 ist anhand der Fig. 19 und 20 beschrieben worden. Die Stelleinheit 16 wird an die Stirnseite des Getriebegehäuses 8 angebaut, wie Fig. 24 zeigt.

Die verschiedenen Kammern 98, 99 der Stelleinheit 15 sowie 118, 119 der Stelleinheit 16 müssen nicht in einem gemeinsamen Gehäuse vorgesehen sein. Es ist durchaus möglich, für die einzelnen Kammern auch getrennte Gehäuse vorzusehen. So ist beispielhaft in Fig. 25 dargestellt, daß für die beiden Kolben 100, 101 der Stelleinheit 15 zwei getrennte Zylindergehäuse vorgesehen sind. Aufgrund dieser getrennten Ausbildung können sie platzsparend innerhalb des Getriebegehäuses 8 eingebaut werden. In gleicher Weise können auch die Druckräume 118, 119 für die Kolben 122, 123 der Stelleinheit 16 getrennte Zylindergehäuse aufweisen.

Das Getriebegehäuse 8 kann so ausgebildet sein, daß die Stelleinheit 15 durch eine Öffnung im Getriebegehäuse 8 eingebaut werden kann. Es ist aber auch möglich, das Getriebegehäuse 8 so auszubilden, daß das Gehäuse 97 der Stelleinheit 15 Bestandteil des Getriebegehäuses 8 ist. In gleicher Weise kann auch das Gehäuse 117 der Stelleinheit 16 Bestandteil des Getriebegehäuses 8 sein.

Es ist ferner möglich, die Brücke 127 zwar drehfest auf der Schaltwelle 92 anzuordnen, die Brücke selbst jedoch ortsfest in bezug auf das Getriebegehäuse 8 anzuordnen. In diesem Falle bewegt sich die Schaltwelle 92 beim Verschieben mittels der Stelleinheit 15 relativ zur Brücke 127. Dies hat den Vorteil, daß die Brücke 127 und ihre beiden Arme 128, 129 sehr schmal ausgebildet sein können, da bei einer solchen Ausführung die Brückenarme 128, 129 stets im Bereich der Kolben 122, 123 der Stelleinheit 16 bleiben.

Die Fig. 27 bis 29 zeigen eine Ausführungsform, bei der sowohl die Stelleinheit 15 für die Gangwahl als auch die Stelleinheit 16 für die Gassenwahl in das Getriebegehäuse 8 integriert sind. Die Stelleinheiten 15, 16 können als Einbaueinheiten ausgebildet sein, die durch eine entsprechende Öffnung in das Getriebegehäuse 8 eingebaut werden. Die Gehäuse 97, 117 der Stelleinheiten 15, 16 können aber auch Bestandteil des Getriebegehäuses 8 sein. Die Stelleinheit 15, mit der die Gänge durch Axialverschieben der Schaltwelle 92 eingelegt werden, ist im wesentlichen entsprechend den Fig. 18 und 19 ausgebildet. Die Zylindergehäuse liegen, bezogen auf eine die Achse der Schaltwelle 92 enthaltende Vertikalebene, beiderseits dieser Vertikalebene. Im übrigen arbeitet die Stelleinheit 15 in gleicher Weise, wie es anhand der Fig. 17 und 18 erläutert worden ist.

Die Stelleinheit 16, mit welcher die Gassenwahl getroffen wird, ist gleich ausgebildet wie bei der Ausführungsform nach den Fig. 24 bis 26. Die Stelleinheit 16 hat die beiden senkrecht zur Achse der Schaltwelle 92 liegenden Kolben 122, 123, die mit den Armen 128, 129 der Brücke 127 zusammenwirken. Durch Ein- und Ausfahren der Kolben 122, 123 wird die Brücke 127 und damit auch die Schaltwelle 92 um deren Achse geschwenkt bzw. gedreht. Die Wirkungsweise der Stelleinheit 16 ist anhand der Fig. 19 und 20 erläutert worden.

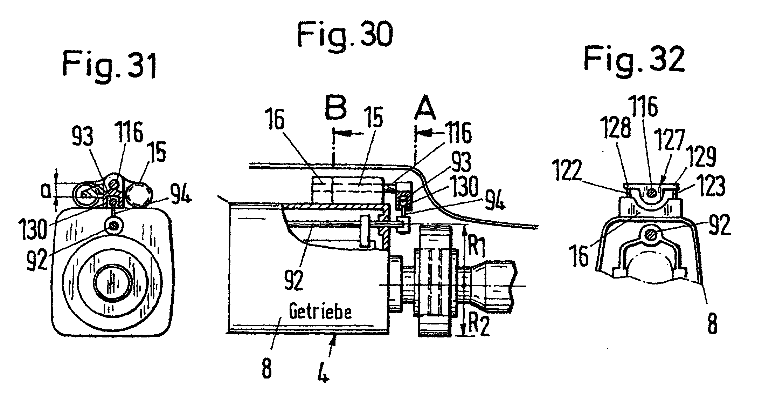

Die Stelleinrichtung gemäß den Fig. 30 bis 32 ist auf dem Getriebegehäuse 8 montiert. Das aus dem Getriebegehäuse 8 ragende Ende der Schaltwelle 92 trägt drehfest und axial unverschieblich den Schalthebel 94, der in der Einbaulage aufwärts ragt. Die Stelleinrichtung hat die Stelleinheit 15, mit welcher die Schaltwelle 92 für die Gangwahl axial verschoben werden kann. Im übrigen arbeitet die Stelleinheit 15 gleich wie das Ausführungsbeispiel gemäß den Fig. 17 und 18. Durch Ein- und Ausfahren der Kolben wird die Stange 116 axial verschoben, die parallel zur Schaltwelle 92 liegt. In der Einbaulage ist die Kupplungshülse 130 nach unten offen und nimmt den am oberen Ende des Schalthebels 94 angeordneten Kugelkopf 93 auf. Wird die Stange 116 in der anhand der Fig. 17 und 18 beschriebenen Weise axial verschoben, wird über die Kupplungshülse 130 und den Schalthebel 94 die Schaltwelle 92 entsprechend axial verschoben, um den gewünschten Gang einzulegen. Selbstverständlich kann der Schalthebel 94 auf der Stange 116 und die Kupplungshülse 130 auf der Schaltwelle 92 angeordnet sein.

Auf der von der Kupplungshülse 130 abgewandten Seite der Stelleinheit 15 ist die für die Gassenwahl vorgesehene Stelleinheit 16 an der Stelleinheit 15 angeflanscht. Die beiden Kolben 122, 123 stehen, wie Fig. 32 zeigt, in der Einbaulage nach oben vor und liegen an den Armen 128, 129 der Brücke 127 an. Sie sitzt drehfest auf der Stange 116. In Verschieberichtung der Stange 116 sind die Brükkenarme 128, 129 wiederum so lang, daß sie beim Verschieben nicht außer Eingriff mit den Kolben 122, 123 kommen. Wenn die Brücke 127 relativ zur Stelleinheit 15, 16 unverschieblich gelagert ist, können die Brückenarme 128, 129 wiederum sehr schmal ausgebildet sein. Wie anhand der Fig. 19 und 20 beschrieben worden ist, wird die Brücke 127 durch Ausfahren des jeweiligen Kolbens 122, 123 um die Achse der Stange 116 gedreht. Da die Brücke 127 drehfest auf der Stange 116 sitzt, wird sie entsprechend mitgedreht. Die Kupplungshülse 130 sitzt ebenfalls drehfest auf der Stange 116. Darum wird die Kupplungshülse 130 gedreht, wobei sie über den Kugelkopf 93 den Schalthebel 94 um die Achse der Schaltwelle 92 schwenkt und diese dadurch in der gewünschten Richtung dreht. Der Schalthebel 94 ist so dünn, daß er die notwendigen Schwenkbewegungen relativ zur Kupplungshülse 130 ausführen kann.

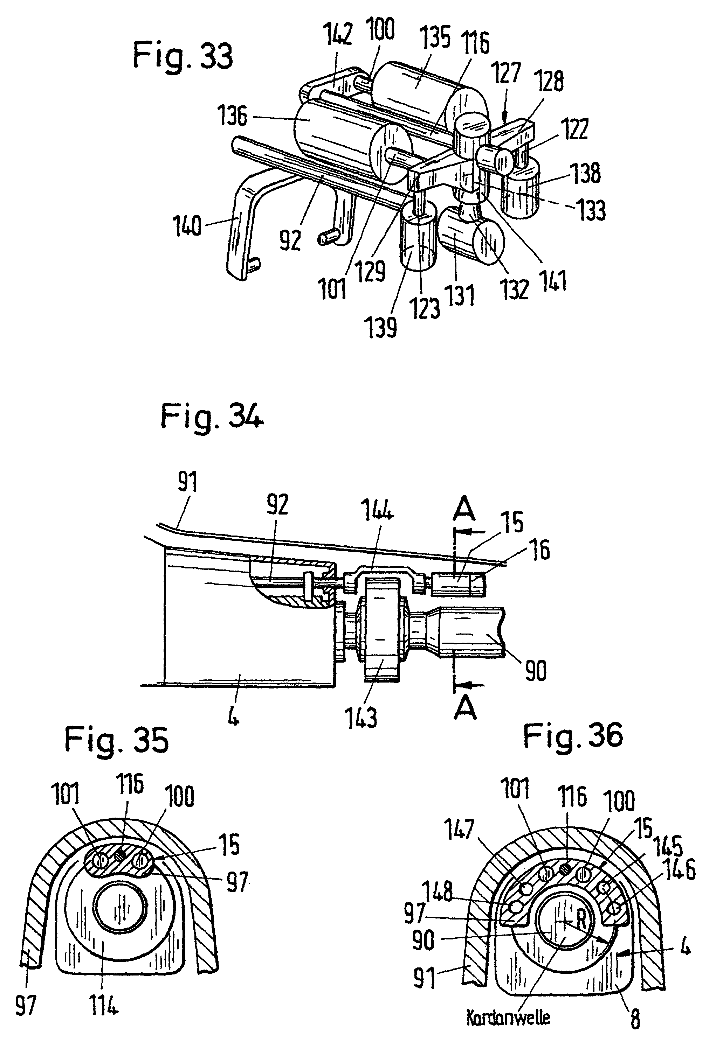

Bei der Ausführungsform nach Fig. 33 ist die Brücke 127 in Höhe des außerhalb des Getriebegehäuses liegenden Endes der Schaltwelle 92 angeordnet. In diesem Falle ist die Brükke 127 mit einem hülsenförmigen Ansatz 141 versehen, der nach unten offen ist und eine Kugel 133 auf dem Arm 132 eines Kupplungsstückes 131 aufnimmt, das auf das Ende der Schaltwelle 92 aufgesetzt, vorzugsweise aufgeschraubt ist. Die Kolben 122, 123 der Zylindergehäuse 138, 139 liegen an der Unterseite der Brückenarme 128, 129 an, die sich senkrecht zur Schaltwelle 92 fluchtend zueinander erstrecken. Die Brücke 127 sitzt wiederum drehfest auf der Stange 116. Werden die Kolben 122, 123, wie dies anhand der Fig. 19 und 20 erläutert worden ist, aus- und eingefahren, wird die Brücke 127 in der entsprechenden Richtung geschwenkt, wodurch die Stange 116 um ihre Achse gedreht wird. Infolge des Eingriffes des Armes 132 in den Ansatz 141 wird dabei die Schaltwelle 92 in entsprechendem Maße um ihre Achse gedreht.

Die Stange 116 ist an ihrem von der Brücke 127 abgewandten Ende mit einer quer abstehenden Lasche 142 versehen, an welcher der Kolben 100 angreift. Der andere Kolben 101 greift an dem einen Brückenarm 129 an. Die Kolben 100, 101 liegen senkrecht zu den Kolben 122, 123. Werden die Kolben 100, 101, wie anhand der Fig. 17 und 18 erläutert worden ist, aus- und eingefahren, wird die Stange 116 über die Lasche 142 bzw. über die Brücke 127 axial verschoben. Hierbei wird über den Arm 141 und das Kupplungsstück 131 die Schaltwelle 92 axial verschoben. Die Kolben 100, 101 sind in räumlich voneinander getrennten Zylindergehäusen 135, 136 untergebracht.

Die beiden Zylindergehäuse 138, 139 können selbstverständlich auch entsprechend dem Ausführungsbeispiel nach den Fig. 19 und 20 ausgebildet sein. Darüber hinaus ist es möglich, sämtliche Zylindergehäuse 135, 136, 138, 139 zu einem gemeinsamen Gehäuse zusammenzufassen. Eine solche Ausbildung ist auch bei den Ausführungsformen nach den Fig. 6 bis 11 und 15 bis 33 möglich.

Fig. 34 zeigt eine Ausführungsform, bei der in der Antriebsverbindung zwischen der Ausgangswelle des Getriebes 4 und der Kardanwelle 90 eine Tilgerelement 143 angeordnet ist. Da das Tilgerelement 143 bis in Höhe der Schaltwelle 92 ragt, ist die Stange 116 der Stelleinrichtung über ein Brückenelement 144 drehfest und axial unverschieblich mit der Schaltwelle 92 des Getriebes 4 verbunden. Das Brückenelement 144 ist etwa U-förmig ausgebildet und übergreift das Tilgerelement 143 derart, daß es beim Axialverschieben der Stange 116 und der Schaltwelle 92 nicht am Tilgerelement 143 zur Anlage kommt. Die Stelleinrichtung hat wiederum die Stelleinheit 15, mit welcher die Gänge eingelegt werden können, und die Stelleinheit 16 für die Gassenwahl. Die beiden Stelleinheiten 15, 16 können entsprechend den Fig. 19 und 20 ausgebildet und angeordnet sein. Beide Stelleinheiten 15, 16 können auch ein gemeinsames Gehäuse haben.

Wie Fig. 35 zeigt, ist das Gehäuse 97 der Stelleinheit 15 vorteilhaft kreisbogenförmig ausgebildet, im Querschnitt gesehen. Dadurch kann die Stelleinheit 15 auch in einem weiter hinten liegenden Bereich innerhalb des Tunnels 91 des Fahrzeuges 1 untergebracht werden. Das Gehäuse 117 (Fig. 19 und 20) der Stelleinheit 16 ist entsprechend ausgebildet.

Fig. 36 zeigt eine Weiterbildung der Stelleinrichtung gemäß den Fig. 34 und 35. Das Gehäuse 97 der Stelleinheit 15 ist im Vergleich zur vorigen Ausführungsform verlängert, so daß es, in Achsrichtung der Schaltwelle des Getriebes 4 gesehen, etwa Halbkreisform hat. Die Stange 116 wird mit den beiden Kolben 100, 101 der Stelleinheit 15 in der beschriebenen Weise axial verschoben. Auf der von der Stange 116 abgewandten Seite des Kolbens 100 sind im Gehäuse 97 ein Einbauraum 145 für ein dem Kolben 100 zugeordnetes Magnetventil sowie ein Einbauraum 146 für ein dem Kolben der Stelleinheit 16 (nicht dargestellt) zugeordnetes Magnetventil vorgesehen. Auf der anderen Seite sind ein Einbauraum 147 für ein dem Kolben 101 zugeordnetes Magnetventil sowie ein Einbauraum 148 für ein der (nicht dargestellten) Stelleinheit 16 zugeordnetes Magnetventil vorgesehen. Die Achsen der Einbauräume 145 bis 148, der Kolben 100, 101 und der Stange 116 liegen auf einem gedachten Kreis um die Achse der Kardanwelle 90. Das Gehäuse 97 ist so ausgebildet, daß es mit geringem Abstand die Kardanwelle 90 teilkreisförmig umgibt, in Achsrichtung der Kardanwelle gesehen. Dabei liegt das Gehäuse 97, in Achsrichtung der Kardanwelle 90 gesehen, innerhalb des Umrisses des Getriebegehäuses 8. Dadurch kann die Stelleinrichtung ohne Schwierigkeiten im Tunnel 91 des Fahrzeuges untergebracht werden. Diese Ausbildung zeichnet sich durch eine sehr kompakte Bauform aus. Die Stange 116 ist wiederum drehfest und axial unbeweglich mit der Schaltwelle 92 des Getriebes verbunden. Mit der Stelleinrichtung kann somit die Schaltwelle 92 in der beschriebenen Weise für die Gassenwahl gedreht und für die Auswahl des Ganges axial verschoben werden. Auch bei dieser Ausführungsform können die beiden Stelleinheiten 15, 16 ein gemeinsames Gehäuse haben.

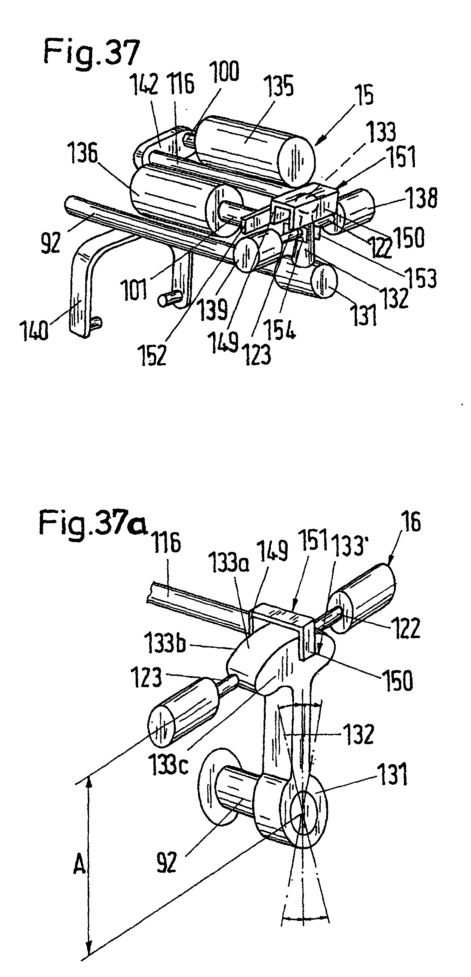

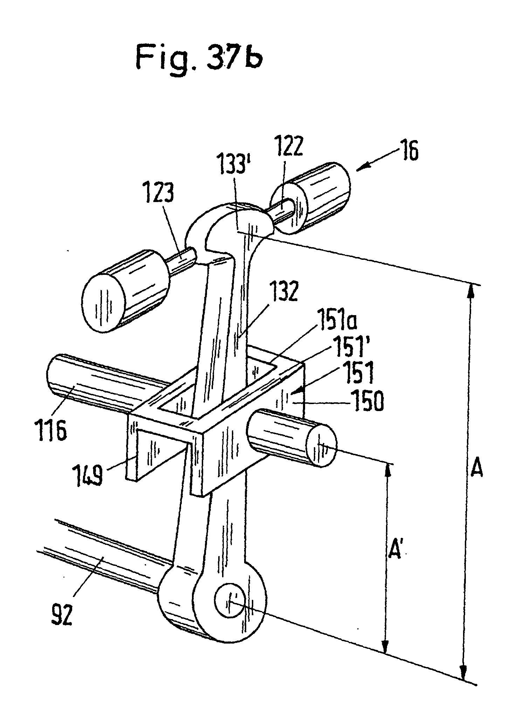

Die Stelleinrichtung gemäß Fig. 37 ist ähnlich ausgebildet wie die Ausführungsform nach Fig. 33. Die Schaltwelle 92 ist an einem Ende mit dem Kupplungsstück 131 versehen, das den quer abstehenden Arm 132 mit der Kugel 133 aufweist. Das Kupplungsstück 131 sitzt wiederum drehfest und axial unverschieblich auf der Schaltwelle 92. Die Kugel 133 liegt an den einander zugewandten Seiten zweier Schenkel 149 und 150 eines U-förmigen Profilstückes 151 an. Die Schenkel 149, 150 erstrecken sich senkrecht zur Achse der Schaltwelle 92. Am einen Schenkel 149 des Profilstückes 151 ist das eine Ende der Stange 116 befestigt, die zwischen den beiden Zylindergehäusen 135 und 136 der Stelleinheit 15 angeordnet ist. Die beiden Zylindergehäuse 135, 136 liegen parallel zueinander sowie parallel zur Schaltwelle 92. Der Schenkel 149 des Profilstückes 151 weist einen Verlängerungsarm 152 auf, der sich senkrecht zur Schaltwelle 92 erstreckt und an dem der Kolben 101 des Zylindergehäuses 136 angreift. Der Kolben 100 des Zylindergehäuses 135 greift an der senkrecht zur Achse der Schaltwelle 92 liegenden Lasche 142 an, die fest mit der Stange 116 verbunden ist.

Die Kolben 100, 101 werden, wie dies anhand der Fig. 17 und 18 erläutert worden ist, zum Verschieben der Stange 116 entsprechend aus- und eingefahren. Hierbei wird das Profilstück 151 mitgenommen, das seinerseits über den Arm 132 das Kupplungsstück 131 und damit die Schaltwelle 92 axial verschiebt. Auf diese Weise können die Gänge des Getriebes eingelegt werden.

Im Bereich unterhalb des Profilstückes 151 greifen am Am 132 diametral einander gegenüberliegend die Kolben 122, 123 der Zylindergehäuse 138, 139 an. Die Achsen der fluchtend zueinander liegenden Kolben 122, 123 liegen senkrecht zur Schaltwelle 92 sowie in einer Horizontalebene. Durch Aus- und Einfahren der jeweiligen Kolben 122 bzw. 123 wird der Arm 132 um die Achse der Schaltwelle 92 geschwenkt. Dabei verschiebt sich die Kugel 133 zwischen den Schenkeln 149, 150 des Profilstückes 151. Durch Drehen der Schaltwelle 92 wird in der beschriebenen Weise die erforderliche Gasse angefahren.

Damit die Kolben 122, 123 beim Verschieben der Schaltwelle 92 nicht außer Eingriff mit dem Arm 132 kommen, weist er entsprechende verbreiterte Anlageflächen 153, 154 auf, die sich in Verschieberichtung der Schaltwelle 92 erstrecken. Die Zylindergehäuse 138, 139 liegen im Bereich zwischen dem Profilstück 151 und dem Kupplungsstück 131.

Bei der Ausführungsform gemäß Fig. 37a ist der Arm 132 anstelle eines Kugelkopfes mit einer Verbreiterung 133' versehen, die eine bogenförmig gekrümmte Stirnseite 133a aufweist. Die Verbreiterung 133' wird vom U-förmigen Profilstück 151 übergriffen, dessen beide Schenkel 149, 150 mit geringem Abstand an den beiden Seitenflächen 133b, 133c der Verbreiterung 133' angeordnet sind. An der Verbreiterung 133' greifen die Kolben 122, 123 der Stelleinheit 16 an. Das Profilstück 151 ist über seinen Schenkel 149 mit der Stange 116 der (nicht dargestellten) Stelleinheit 15 fest verbunden. Durch Verschieben der Stange 116 mittels der Stelleinheit 15 wird über das U-förmige Profilstück 151 und den Arm 132 die Schaltwelle 92 in der beschriebenen Weise axial verschoben, um den gewünschten Gang einzulegen. Durch Ein- und Ausfahren der Kolben 122, 123 der Stelleinheit 16 wird der Arm 132 in der entsprechenden Richtung geschwenkt, wodurch über das Kupplungsstück 131 die Schaltwelle 92 in der gewünschten Richtung für die Gassenwahl gedreht wird.

Bei dieser Ausführungsform ist der Abstand zwischen der gedachten Achse der beiden Kolben 122, 123 und der Achse der Schaltwelle 92 mit A bezeichnet. Für die Drehbewegung der Schaltwelle 92 kann dieser Abstand A als Hebelarm ausgenutzt werden. Aufgrund dieses großen Hebelarmes A ergibt sich eine sehr hohe Stellgenauigkeit bei gleichzeitiger Reduzierung der Kraft, die notwendig ist, um das gleiche Drehmoment zu erzeugen. Bei der vorigen Ausführungsform nach Fig. 37 wird lediglich der halbe Hebelarm ausgenutzt, da die Kolben 122, 123 der Stelleinheit 16 etwa in halber Länge am Arm 132 angreifen.

Fig. 37b zeigt eine Weiterbildung der Stelleinrichtung gemäß Fig. 37a. Auf der Stange 116 ist das U-förmige Profilstück 151 befestigt, das die beiden Schenkel 149 und 150 hat. Der Quersteg 151' des Profilstückes 151 hat eine Durchtrittsöffnung 151a, durch welche der auf der Schaltwelle 92 sitzende Arm 132 ragt. Er weist an seinem oberen freien Ende die Verbreiterung 133' auf, an der die beiden Kolben 122, 123 der Stelleinheit 16 angreifen. Die beiden Schenkel 149, 150 des Profilstückes 151 umfassen den Arm 132 an einander gegenüberliegenden Seiten mit nur geringem Spiel. Um einen Gang einzulegen, wird die Stange 116 in der beschriebenen Weise axial verschoben. Über das Profilstück 151 und den Arm 132 wird die Schaltwelle 92 entsprechend axial verschoben. Um die gewünschte Gasse anzufahren, werden die Kolben 122, 123 in entsprechendem Maße ein- bzw. ausgefahren, wodurch der Arm 132 in der gewünschten Richtung innerhalb der Durchtrittsöffnung 151a des Profilstückes 151 geschwenkt und damit die Schaltwelle 92 um ihre Achse gedreht wird.

Auch bei dieser Ausführungsform ergibt sich zum Verschwenken des Armes 132 der große Hebelarm A, der wesentlich größer ist als der zum Verschieben der Schaltwelle 92 wirksame Hebelarm A', der dem Achsabstand zwischen der Stange 116 und der Schaltwelle 92 entspricht.

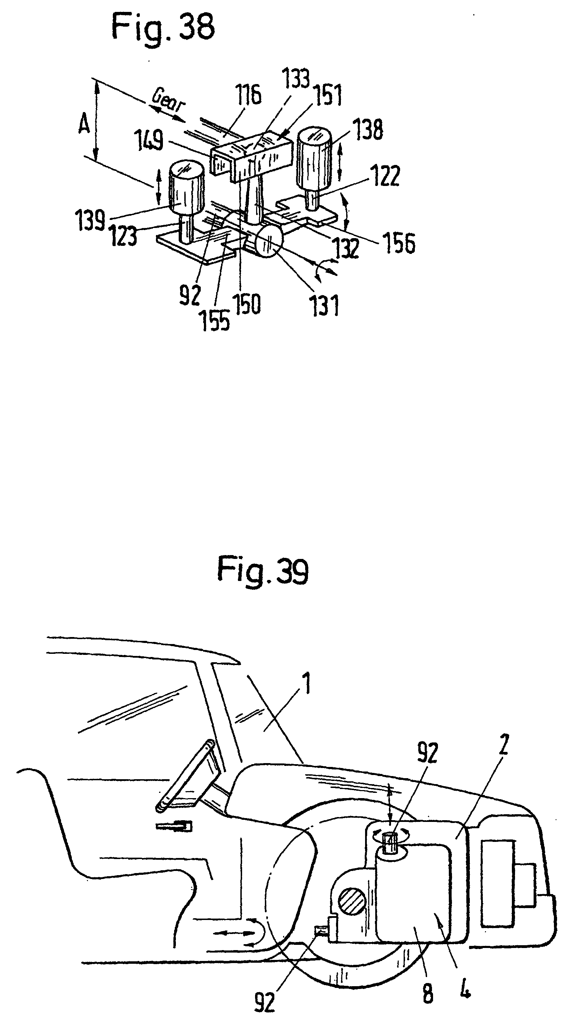

Fig. 38 zeigt eine Stelleinrichtung, die ähnlich ausgebildet ist wie die Ausführungsform nach Fig. 37 bzw. 37a. Das Kupplungsstück 131 weist diametral einander gegenüberliegende Arme 155, 156 auf, die drehfest am Kupplungsstück 131 vorgesehen sind und sich senkrecht zur Schaltwelle 92 erstrecken. An den freien Enden sind die Arme 155, 156 mit in Verschieberichtung der Schaltwelle 92 sich erstreckenden Verbreiterungen 157, 158 versehen, an denen die Kolben 122, 123 der Zylindergehäuse 138, 139 angreifen. Im Gegensatz zur vorigen Ausführungsform liegen die Kolben 122, 123 parallel zum Arm 132, der mit seiner Kugel 133 zwischen die Schenkel 149, 150 des U-förmigen Profilstückes 151 eingreift. Im übrigen ist die Stelleinrichtung gleich ausgebildet wie das Ausführungsbeispiel nach Fig. 37. Mit den Kolben 100, 101 der Zylindergehäuse 135, 136 (Fig. 37) wird die Stange 116 und damit das Profilstück 151 verschoben. Über den Arm 132 und das Kupplungsstück 131 wird die Schaltwelle 92 entsprechend verschoben. Die Verbreiterungen 157, 158 an den Enden der Arme 155, 156 sind in Verschieberichtung der Schaltwelle 92 ausreichend lang, so daß die Kolben 122, 123 auch bei verschobener Schaltwelle 92 noch auf den Verbreiterungen aufliegen. Durch das beschriebene Aus- und Einfahren des jeweiligen Kolbens 122, 123 wird das Kupplungsstück 131 und damit die Schaltwelle 92 um ihre Achse gedreht, wobei der Kugelkopf 133 des Armes 132 zwischen den Schenkeln 149, 150 des Profilstückes 151 verschoben wird. Durch diese Drehung der Schaltwelle wird die jeweilige Gasse angefahren. Anschließend kann in der ausgewählten Gasse durch Verschieben der Schaltwelle 92 der gewünschte Gang eingelegt werden.

Es ist möglich, die Schaltwelle 92 beim Axialverschieben relativ zum Kupplungsstück 131 zu verschieben. In diesem Falle sind die Verbreiterungen 157, 158 an den Enden der Arme 155, 156 nicht erforderlich. Die Arme können dadurch sehr schmal ausgebildet sein. Eine solche Ausbildung ist im übrigen auch beim Ausführungsbeispiel nach Fig. 37 möglich. Darüber hinaus können die beiden Zylindergehäuse 138, 139 auch einstückig miteinander ausgebildet sein. Schließlich ist es, wie auch bei den vorigen Ausführungsbeispielen schon erläutert, möglich, sämtliche Gehäuse der Kolben 100, 101, 122, 123 einstükkig miteinander auszubilden.

Auch bei der Ausführungsform nach Fig. 38 wird der gesamte Hebelarm A, welcher dem Achsabstand zwischen der Schaltwelle 92 und der Stange 116 entspricht, beim Drehen der Schaltwelle 92 ausgenutzt, wie dies anhand von Fig. 39a beschrieben worden ist. Darüber hinaus können die Arme 155, 156 sehr lang ausgebildet sein, so daß sich beim Ein- und Ausfahren der Kolben 122, 123 entsprechend große wirksame Hebelarme ergeben. Dadurch wird die Stellkraft der Zylindergehäuse 138, 139 bei gleichem aufzubringendem Drehmoment verringert. Aufgrund der großen Hebelarme ergibt sich ein größerer Hub für die Kolben 122, 123, der zu einer erhöhten Stellgenauigkeit führt.

Fig. 39 zeigt ein Kraftfahrzeug 1 mit einem quer liegenden Frontmotor 2 und einem Getriebe 4, dessen Schaltwelle 92 entweder nach oben oder nach hinten aus dem Getriebegehäuse 8 ragt. In beiden Fällen steht nur ein sehr kleiner Einbauraum zur Verfügung, um die Stelleinrichtung unterzubringen.

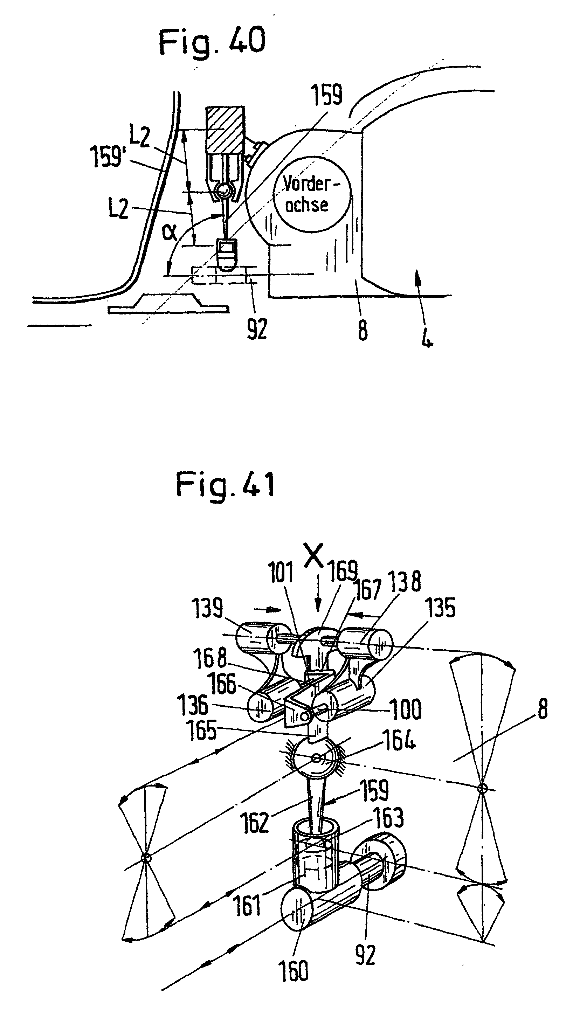

Fig. 40 zeigt eine Stelleinrichtung zum Anschluß an die in Fahrtrichtung nach hinten aus dem Getriebegehäuse 8 ragende Schaltwelle 92. Die Stelleinrichtung ist zwischen dem ansteigenden Bodenblech 159 des Kraftfahrzeuges und dem Getriebe 4 untergebracht. Die entsprechende Stelleinheit der Stelleinrichtung wird unter einem Winkel α zur Schaltwelle 92 eingebaut, wodurch bei den gegebenen räumlichen Verhältnissen ein optimaler Einbau gewährleistet ist. Die Schaltwelle 92 ist über einen zweiarmigen, sphärisch gelagerten Schalthebel 159 mit der Stelleinrichtung gelenkig verbunden. Mit der Stelleinrichtung kann die Schaltwelle 92 für die Gangwahl axial verschoben und für die Gassenwahl um ihre Achse gedreht werden. In Fig. 40 sind die verschiedenen Schiebestellungen der Schaltwelle 92 angedeutet. Durch entsprechende Auslegung der Hebelarme L₁ und L₂ des Schalthebels 159 kann der Hub der Stelleinheiten so weit reduziert werden, daß die Vorteile der Hydraulik, nämlich eine hohe Kraftdichte, voll ausgenutzt werden können. Dadurch kann im engsten Bereich zwischen Bodenblech 159' und Differentialeinheit des Fahrzeuges 1 die Stelleinrichtung in kleinstmöglicher Bauform untergebracht werden.

Fig. 41 zeigt ein erstes Ausführungsbeispiel einer solchen Stelleinrichtung. Auf der horizontal in Fahrtrichtung nach hinten aus dem Getriebegehäuse 8 ragenden Schaltwelle 92 sitzt das Kupplungsstück 160, von dem radial eine Hülse 161 absteht, die in der Einbaulage aufwärts ragt. In sie greift der Schalthebel 159 mit seinem einen Arm 162 ein. Er trägt am freien Ende eine Kugel 163, die an der Innenwandung der Hülse 161 anliegt und beim Schwenken des Armes 162 begrenzt in Achsrichtung relativ zur Hülse 161 verschiebbar ist. Der Arm 162 ist in Richtung auf die Kugel 163 verjüngt ausgebildet. Der Schalthebel 162 ist über eine Kugel 164 sphärisch im Kraftfahrzeug gelagert. Der andere Arm 165 des Schalthebels 159 ist als Formstück ausgebildet. Der Arm 165 weist eine quer zur Schaltwelle 92 liegende Lasche 166 auf, an der der Kolben 100 des Zylindergehäuses 135 angreift. Die Achse des Kolbens 100 liegt im Bereich oberhalb der Schaltwelle 92 und parallel zu ihr.

Der Kolben 101 des anderen Zylindergehäuses 136 liegt an einer weiteren Lasche 167 an, die parallel zur Lasche 166 liegt. Die beiden Laschen 166, 167 stehen von einem Mittelstück 168 senkrecht ab, das sich in Achsrichtung der Schaltwelle 92 erstreckt und Teil des Schalthebelarmes 165 ist. Die beiden Zylindergehäuse 135, 136 liegen wiederum parallel zueinander und zur Schaltwelle 92.

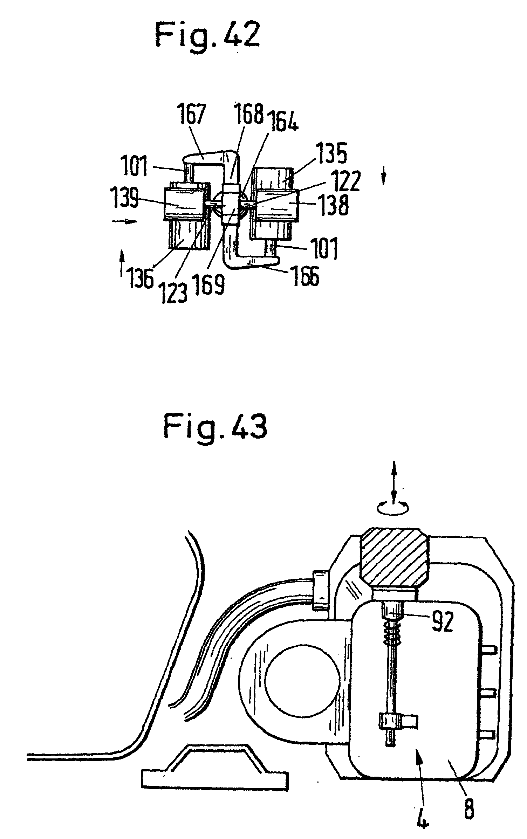

Der Arm 165 hat eine weitere Lasche 169, die im Bereich oberhalb der beiden Laschen 166, 167 angeordnet ist und sich parallel zur Schaltwelle 92 erstreckt. Wie Fig. 42 in Draufsicht auf die Stelleinrichtung nach Fig. 41 zeigt, liegt die Lasche 169 senkrecht zu den beiden Laschen 166, 167, die entgegengesetzt zueinander vom Mittelstück 168 abstehen. An den beiden einander gegenüberliegenden Seiten der Lasche 169 greifen die Kolben 122 und 123 der Zylindergehäuse 138 und 139 an, die fluchtend zueinander sowie senkrecht zu den Zylindergehäusen 135, 136 liegen. Die Zylindergehäuse 138, 139 liegen im Bereich oberhalb der Zylindergehäuse 135, 136.

Um die jeweilige Gasse anzufahren, werden die Kolben 122 oder 123 in der beschriebenen Weise mittels Hydraulikmedium aus- und eingefahren, wodurch der Schalthebel 159 um seine sphärische Lagerung 164 geschwenkt wird. Der untere Arm 162 des Schalthebels 159 nimmt hierbei die Hülse 161 mit, wodurch die Schaltwelle 92 um ihre Achse gedreht wird.

Sobald die gewünschte Gasse angefahren ist, werden die Kolben 100 oder 101 in der beschriebenen Weise mittels Hydraulikmedium aus- und eingefahren, wodurch der Schalthebel 159 nunmehr in einer die Achse der Schaltwelle 92 enthaltenden Vertikalebene um die sphärische Lagerung 164 geschwenkt wird. Über den Arm 162 wird dabei die Schaltwelle 92 in der gewünschten Richtung für das Einlegen des Ganges verschoben. Die Kugel 164 ist beim Ein- und Ausfahren der Kolben 100, 101 gegen Drehen um die Längsachse des Schalthebels 159 in geeigneter Weise gesichert. Da der Hebelarm 162 verjüngt ausgebildet ist und lediglich mit der Kugel 163 an der Innenwandung der Hülse 161 anliegt, können die erforderlichen Schwenkbewegungen des Schalthebels 159 für die Gassen- und die Gangwahl ohne Schwierigkeiten durchgeführt werden. In Fig. 41 sind die entsprechenden Schwenkwinkel des Schalthebels 159 bei Betätigung der Kolben 122, 123 (Gassenwahl) und bei Betätigung der Kolben 100, 101 (Gangwahl) eingezeichnet.

Die Zylindergehäuse 135, 136, 138, 139 können zusammen mit der sphärischen Lagerung 164 des Schalthebels 159 zu einem gemeinsamen Gehäuse zusammengefaßt sein.

Fig. 43 zeigt das Getriebe 4, dessen Schaltwelle 92 aufwärts verläuft und nach oben aus dem Getriebegehäuse 8 ragt. In diesem Fall muß die Stelleinrichtung in dem engen Einbauraum zwischen der Oberseite des Getriebegehäuses 8 und der Motorhaube untergebracht werden.

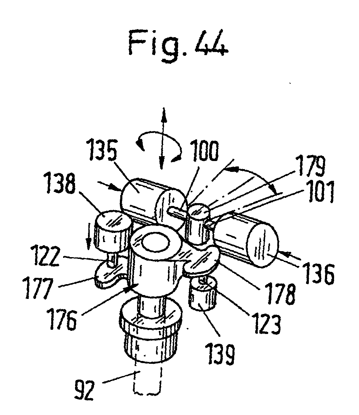

Eine vorteilhafte Ausführung einer solchen Stelleinrichtung zeigt Fig. 44. Auf dem oberen Ende der Schaltwelle 92 sitzt ein Kupplungsstück 176, von dem radial drei Arme 177 bis 179 abstehen. Die beiden Arme 177, 178 sind axial versetzt am Kupplungsstück 176 angeordnet. In Achsrichtung des Kupplungsstückes 176 bzw. der Schaltwelle 92 gesehen, liegen die Arme 177, 178 diametral einander gegenüber. Die freien Enden der Arme 177, 178 sind in Umfangsrichtung des Kupplungsstückes 176 verbreitert ausgebildet. Der Arm 177 ist am unteren Ende des hülsenförmigen Kupplungsstückes 176 vorgesehen, während der Arm 178 am oberen Ende des Kupplungsstückes angeordnet ist. Auf dem verbreiterten Ende des Armes 177 liegt der Kolben 122 und an der Unterseite des gegenüberliegenden Armes 178 der Kolben 123 der Zylindergehäuse 138, 139 an. Die Achsen der beiden Kolben 122, 123 liegen parallel zueinander sowie zur Schaltwelle 92.

Der Arm 179 liegt senkrecht zu den beiden Armen 177, 178. An seinen einander gegenüberliegenden Seiten greifen die Kolben 100 und 101 der Zylindergehäuse 135, 136 an. Die Kolben 100, 101 liegen senkrecht zu den Kolben 122, 123 und zur Schaltwelle 92.

Die Kolben 100, 101, die in einer Horizontalebene angeordnet sind, werden in der beschriebenen Weise wahlweise durch Hydraulikmedium aus- und eingefahren, wodurch über den Arm 179 das Kupplungsstück 176 um seine Achse gedreht wird. Da es drehfest auf der Schaltwelle 92 sitzt, wird diese in entsprechendem Maße gedreht. Auf diese Weise wird der jeweilige Gang eingelegt.

Um die gewünschte Gasse anzufahren, wird wahlweise der Kolben 122 oder 123 aus- und eingefahren, wodurch über den jeweiligen Arm 177, 178 das Kupplungsstück 176 und damit die Schaltwelle 92 in der gewünschten Richtung verschoben werden. Die Verbreiterungen an den Enden der Arme 177, 178 sind so breit, daß die Kolben 122, 123 beim Drehen der Schaltwelle 92 nicht außer Eingriff mit den Armen 177, 178 kommen. Entsprechend ist der Arm 179 im Anlagebereich der Kolben 100, 101 in Verschieberichtung der Schaltwelle 92 so lang, daß die Kolben 100, 101 nicht außer Eingriff mit dem Arm 179 gelangen können.

Bei sämtlichen beschriebenen Ausführungsformen können die Zylindergehäuse, mit denen die jeweilige Gasse angefahren wird, entsprechend den in den Fig. 7 und 8 dargestellten Ausführungsformen ausgebildet sein. Dies setzt allerdings voraus, daß die Zentrierung in der Neutralstellung durch Federn erfolgt. Bei einem Fünfganggetriebe reichen in diesem Falle einfache Kolben aus, wie beispielhaft in Fig. 7 dargestellt ist. Bei einem Sechsganggetriebe mit einer vierten Gasse G_{IV} für den Rückwärtsgang ist eines der Zylindergehäuse mit einem Hilfskolben 69 versehen.

Bei denjenigen Getrieben, bei denen die Neutralstellung nicht durch Federn bestimmt wird, sind bei sämtlichen beschriebenen Ausführungsformen für die Gassenwahl Kolben erforderlich, die in Buchsen gelagert sind. Dies ist beispielhaft anhand der Fig. 9 und 10 erläutert worden. Auch hier ist bei einem Fünfganggetriebe mit drei Gassen G_{I} bis G_{III} für jeden Kolben eine Buchse vorgesehen, während bei einem Sechsganggetriebe mit einer vierten Gasse G_{IV} für den Rückwärtsgang der eine Kolben mit seiner Buchse in einem Hilfskolben gelagert ist.

## Patentansprüche

1. Stelleinrichtung zur Automatisierung von Handschaltgetrieben von Kraftfahrzeugen, mit wenigstens zwei winklig zueinander liegenden, ortsfest gegenüber dem Getriebe angeordneten Stelleinheiten (15, 15'; 16, 16'), mit denen zur Gassen- und Gangwahl eine Schaltwelle (9, 92) des Handschaltgetriebes (4) drehbar und verschiebbar ist und die jeweils einen Kolben (24, 25; 24', 25') aufweisen, mit dem durch Ausfahren die Schaltwelle (9, 92) verschiebbar bzw. drehbar ist,
**dadurch gekennzeichnet, daß** die Kolben (24, 25; 24', 25') an einem einzigen Hebel (6, 94) angreifen, der mit der Schaltwelle (9, 92) verbunden ist und mit dem die Schaltwelle (9, 92) drehbar und verschiebbar ist.

2. Einrichtung nach Anspruch 1,
**dadurch gekennzeichnet, daß** die Kolben (24, 25; 24', 25') der Stelleinheiten (15, 15'; 16, 16') gelenkig mit dem einen Arm (6') des Hebels (6) verbunden sind.

3. Einrichtung nach Anspruch 1 oder 2,
**dadurch gekennzeichnet, daß** der eine Arm (6') des Hebels (6) mit einem Kugelkopf (34) in einer Kugelaufnahme (33) eines Kupplungsstückes (32) gelagert ist, das drehfest und verschieblich auf dem Kolben (24) der einen Stelleinheit (15) sitzt, und daß vorzugsweise das Kupplungsstück (32) mit einem Kugetkopf (35) in einem auf dem Kolben (25) der anderen Stelleinheit (16) drehfest und unverschieblich angeordneten Führung (36) eingreift, die vorteilhaft durch ein U-förmiges Profilstück gebildet ist, dessen Schenkel (37, 38) quer zur Achse des Kolbens (25) liegen.

4. Einrichtung nach einem der Ansprüche 1 bis 3,
**dadurch gekennzeichnet, daß** der eine Arm (6') des Hebels (6) mit einem Kugelkopf (40) in eine Kugelaufnahme (41) eines Schiebers (42) eingreift, der mit dem Kolben (24) der einen Stelleinheit (15) verbunden ist und der vorzugsweise mit der anderen Stelleinheit (16) quer zur Achse des Kolbens (24) verschiebbar und in einem Support (47) aufgenommen ist, der durch den Kolben (25) der anderen Stelleinheit (16) verschiebbar ist.

5. Einrichtung nach einem der Ansprüche 1 bis 4,
**dadurch gekennzeichnet, daß** am einen Arm (6') des Hebels (6) vier Stelleinheiten (15, 15', 16, 16') angreifen, die in Winkelabständen von jeweils 90° angeordnet sind, und daß vorzugsweise die Kolben (24, 25; 24', 25') der Stelleinheiten (15, 15', 16, 16') am Kugelkopf (40) des einen Hebelarmes (6') angreifen.

6. Einrichtung nach Anspruch 5,
**dadurch gekennzeichnet, daß** mindestens einer der Kolben (25, 25') in einem Hilfskolben (69) aufgenommen ist, und daß vorteilhaft der Kolben (25, 25') relativ zum Hilfskolben (69) verschiebbar ist.

7. Einrichtung nach Anspruch 5 oder 6,
**dadurch gekennzeichnet, daß** der Kolben (24, 25; 24', 25') von einer Buchse (74, 75) aufgenommen ist, die in einem Druckraum (67, 68; 82, 83) der Stelleinheit (15, 15', 16, 16') verschiebbar ist, und daß vorzugsweise der Kolben (24, 25; 24', 25') relativ zur Buchse (74, 75) verschiebbar ist.

8. Einrichtung nach einem der Ansprüche 1 bis 7,
**dadurch gekennzeichnet, daß** das freie Ende des Hebels (94) zwischen den Kolben (24, 24'; 25, 25') liegt, die mit ihren freien Enden an einander gegenüberliegenden Seiten am freien Hebelende angreifen.

9. Einrichtung nach einem der Ansprüche 1 bis 8,
**dadurch gekennzeichnet, daß** die eine Stelleinheit (15, 16) zwei parallel zueinander liegende Kolben (100, 101) aufweist, die jeweils mit einem axialen Anschlag (114, 115) zum Verschieben der Schaltwelle (9) zusammenwirken.

10. Einrichtung nach Anspruch 9,
**dadurch gekennzeichnet, daß** die beiden Kolben (100, 101) in einem gemeinsamen Gehäuse (97) untergebracht sind.

11. Einrichtung nach Anspruch 9 oder 10,
**dadurch gekennzeichnet, daß** die Axialanschläge (114, 115) auf einer Stange (116) sitzen, die parallel zur Achse der Kolben (100, 101) liegt, und daß vorzugsweise die Axialanschläge (114, 115) unverschieblich auf der Stange (116) sitzen, die durch Ausfahren des jeweiligen Kolbens (100, 101) verschiebbar ist.

12. Einrichtung nach Anspruch 11,
**dadurch gekennzeichnet, daß** die Stange (116) mit der Schaltwelle (92) verbunden ist.

13. Einrichtung nach Anspruch 9 oder 10,
**dadurch gekennzeichnet, daß** die Axialanschläge (114, 115) unverschieblich auf der Schaltwelle (92) sitzen.

14. Einrichtung nach einem der Ansprüche 1 bis 13,
**dadurch gekennzeichnet, daß** zum Drehen der Schaltwelle (92) um ihre Achse ein zweiarmiger Hebel (114, 127) vorgesehen ist, an dessen beiden Armen (128, 129) jeweils ein Kolben (122, 123) der Stelleinheit (16) angreift, und daß vorzugsweise der zweiarmige Hebel (114, 127) drehfest auf der Stange (116) sitzt.

15. Einrichtung nach Anspruch 14,
**dadurch gekennzeichnet, daß** der zweiarmige Hebel (14) durch einen Axialanschlag gebildet ist.

16. Einrichtung nach Anspruch 14,
**dadurch gekennzeichnet, daß** der zweiarmige Hebel (127) drehfest auf der Schaltwelle (92) sitzt.

17. Einrichtung nach Anspruch 16,
**dadurch gekennzeichnet, daß** der zweiarmige Hebel (127) eine Kugelaufnahme für einen Kugelkopf (133) aufweist, der an einem quer zur Schaltwelle (192) verlaufenden, an einem auf der Schaltwelle (92) angeordneten Kupplungsstück (131) vorgesehen ist.

18. Einrichtung nach einem der Ansprüche 1 bis 17,
**dadurch gekennzeichnet, daß** die Schaltwelle (92) über ein Brückenelement (144) mit der Stelleinrichtung (15, 15', 16, 16') verbunden ist, und daß vorteilhaft das Brückenelement (144) ein Tilgerelement (143) überbrückt.

19. Einrichtung nach einem der Ansprüche 1 bis 18,
**dadurch gekennzeichnet, daß** am einen Arm (165) des Hebels (159) des Handschaltgetriebes (4) in einer Schwenkrichtung des Hebels (159) mit Abstand voneinander liegende Anschläge (166, 167) vorgesehen sind, an denen jeweils ein Kolben (100, 101) der einen Stelleinheit (15) angreift, und daß am einen Arm (165) des Hebels (159) ein weiterer Anschlag (169) vorgesehen ist, an dessen beiden einander gegenüberliegenden Seiten jeweils ein Kolben (122, 123) der anderen Stelleinheit (16) angreift, die rechtwinklig zur einen Stelleinheit (15) wirkt.

20. Einrichtung nach einem der Ansprüche 1 bis 19,
**dadurch gekennzeichnet, daß** auf der Schaltwelle (92) ein Kupplungsstück (176) sitzt, das drei abstehende Arme (177, 179) aufweist, die in Winkelabständen von jeweils 90° angeordnet sind, daß an zwei einander gegenüberliegenden Armen (177, 178) jeweils ein Kolben (122, 123) angreift, mit dem die Schaltwelle (92) verschiebbar ist, und daß an einander gegenüberliegenden Seiten des dritten Armes (179) jeweils weitere Kolben (100, 101) angreifen, mit denen die Schaltwelle (192) drehbar ist.

## Claims

1. An actuating device for the automation of manual gearboxes of motor vehicles, having at least two actuators (15, 15'; 16, 16') positioned at an angle relative to one another and arranged in a fixed position relative to the gearbox, a selector shaft (9, 92) of the manual gearbox (4) being rotatable and displaceable for the purpose of gate and gear selection with the said actuators, which each have a piston (24, 25; 24', 25') by extension of which the selector shaft (9, 92) is displaceable or rotatable,
**characterised in that** the pistons (24, 25; 24', 25') engage on a single lever (6, 94) which is connected to the selector shaft (9, 92) and with which the selector shaft (9, 92) is rotatable and displaceable.

2. A device according to Claim 1,
**characterised in that** the pistons (24, 25; 24', 25') of the actuators (15, 15'; 16, 16') are hingeably connected to the one arm (6') of the lever (6).

3. A device according to Claim 1 or 2,
**characterised in that** the one arm (6') of the lever (6) is mounted with a spherical head (34) in a ball seat (33) of a coupling (32) which is positioned non-rotatably and displaceably on the piston (24) of the one actuator (15), and **in that** the coupling (32) preferably engages with a spherical head (35) in a guide member (36) rotatably and non-displaceably arranged on the piston (25) of the other actuator (16), which guide member is advantageously formed by a U-shaped profile part, the sides (37, 38) of which are positioned crosswise to the axis of the piston (25).

4. A device according to one of Claims 1 to 3,
**characterised in that** the one arm (6') of the lever (6) engages with a spherical head (40) in a ball seat (41) of a bar (42) which is connected to the piston (24) of the one actuator (15) and which is preferably displaceable with the other actuator (16) crosswise to the axis of the piston (24) and is received in a support (47) which is displaceable by means of the piston (25) of the other actuator (16).

5. A device according to one of Claims 1 to 4,
**characterised in that** four actuators (15, 15'; 16, 16') engage on the one arm (6') of the lever (6), which [actuators] are arranged in an angular separation of 90° in each case, and **in that** the pistons (24, 25; 24', 25') of the actuators (15, 15'; 16, 16') preferably engage on the spherical head (40) of the one lever arm (6').

6. A device according to Claim 5,
**characterised in that** at least one of the pistons (25, 25') is received in an auxiliary piston (69) and **in that** the piston (25, 25') is advantageously displaceable relative to the auxiliary piston (69).

7. A device according to Claim 5 or 6,
**characterised in that** the piston (24, 25; 24', 25') is received by a sleeve (74, 75) which is displaceable within a pressure chamber (67, 68; 82, 83) of the actuator (15, 15'; 16, 16') and **in that** the piston (24, 25; 24', 25') is preferably displaceable relative to the sleeve (74, 75).

8. A device according to one of Claims 1 to 7,
**characterised in that** the free end of the lever (94) is positioned between the pistons (24, 24', 25, 25') which with their free ends engage on mutually opposing sides on the free end of the lever.

9. A device according to one of Claims 1 to 8,
**characterised in that** the one actuator (15, 16) has two pistons (100, 101) positioned parallel to one another which in each case co-operate with an axial stop (114, 115) for displacing the selector shaft (9).

10. A device according to Claim 9,
**characterised in that** the two pistons (100, 101) are accommodated in a common housing (97).

11. A device according to Claim 9 or 10,
**characterised in that** the axial stops (114, 115) are positioned on a rod (116) which is positioned parallel to the axis of the pistons (100, 101), and **in that** the axial stops (114, 115) are preferably positioned non-displaceably on the rod (116), which is displaceable by extension of the respective piston (100, 101).

12. A device according to Claim 11,
**characterised in that** the rod (116) is connected to the selector shaft (92).

13. A device according to Claim 9 or 10,
**characterised in that** the axial stops (114, 115) are positioned non-displaceably on the selector shaft (92).

14. A device according to one of Claims 1 to 13,
**characterised in that**, for the purpose of rotating the selector shaft (92) about its axis, a twin-armed lever (114, 127) is provided, on the two arms (128, 129) of which a piston (122, 123) in each case engages, and **in that** the twin-armed lever (114, 127) is preferably positioned non-rotatably on the rod (116).

15. A device according to Claim 14,
**characterised in that** the twin-armed lever (14) is formed by an axial stop.

16. A device according to Claim 14,
**characterised in that** the twin-armed lever (127) is positioned non-rotatably on the selector shaft (92).

17. A device according to Claim 16,
**characterised in that** the twin-armed lever (127) has a ball seat for a spherical head (133) which is provided on a coupling (131) positioned on the selector shaft (92) and following a course crosswise to the selector shaft (192).

18. A device according to one of Claims 1 to 17,
**characterised in that** the selector shaft (92) is connected to the actuating device (15, 15', 16, 16') via a bridge member (144), and that the bridge member (144) advantageously bridges a mass damper (143).

19. A device according to one of Claims 1 to 18,
**characterised in that** stops (166,167) positioned spaced apart from one another in a swivel direction of the lever (159) are provided on the one arm (165) of the lever (159) of the manual gearbox (4), on which stops in each case a piston (100, 101) of the one actuator (15) engages, and **in that** another stop (169) is provided on the one arm (165) of the lever (159), on the two mutually opposing sides of which stop in each case a piston (122, 123) of the other actuator (16) engages, which actuator acts at right angles to the one actuator (15).

20. A device according to one of Claims 1 to 19,
**characterised in that** a coupling (176) is positioned on the selector shaft (92), which coupling has three projecting arms (177,179) arranged in an angular spacing of 90° in each case, **in that** two mutually opposing arms (177, 178) are in each case engaged by a piston (122, 123), with which piston the selector shaft (92) is displaceable, and that further pistons (100, 101) in each case engage on mutually opposing sides of the third arm (179), with which pistons the selector shaft (192) is rotatable.

## Revendications

1. Dispositif de contrôle pour automatiser des boites de vitesses manuelles de véhicules automobiles, avec au moins deux unités de contrôle (15, 15' ; 16, 16') disposés l'un par rapport à l'autre en formant un angle et de façon fixe par rapport à la boîte de vitesses, avec lesquelles un arbre de commande (9, 92) de la boîte de vitesse manuelle (4) peut pivoter et coulisser pour la sélection des gaz et des vitesses et qui présentent chacune un piston (24, 25 ;24', 25') avec lequel l'arbre de commande (9, 92) peut coulisser ou tourner par sortie, **caractérisé en ce que** les pistons (24, 25 ; 24', 25') s'appliquent sur un seul levier (6, 94), qui est relié à l'arbre de commande (9,92) et avec lequel l'arbre de commande (9, 92) peut pivoter et coulisser.

2. Dispositif selon la revendication 1,
**caractérisé en ce que** les pistons (24, 25 ; 24', 25') des unités de contrôle (15, 15' ;16, 16') sont reliées de façon articulée à un bras (6') du levier (6).

3. Dispositif selon la revendication 1 ou 2,
**caractérisé en ce qu'**un bras (6') du levier (6) est logé avec une tête sphérique (34) dans un logement sphérique (33) d'une pièce d'accouplement (32), qui est logée de façon résistante à la torsion et coulissante sur le piston (24) d'une unité de contrôle (15), et **en ce que** de préférence la pièce d'accouplement (32) s'engage avec une tête sphérique (35) dans un guide (36) disposé de façon résistante à la torsion et non coulissante sur le piston (25) de l'autre unité de commande, lequel guide est formé de façon avantageuse par une pièce profilée en forme de U, dont les branches (37, 38) sont disposées transversalement à l'axe du piston (25).

4. Dispositif selon l'une quelconque des revendications 1 à 3,
**caractérisé en ce que** un bras (6') du levier (6) s'engage avec une tête sphérique (40) dans un logement sphérique (41) d'un coulisseau (42), qui est relié au piston (24) d'une unité de contrôle (15) et qui est réceptionné de façon à pouvoir coulisser de préférence avec l'autre unité de contrôle (16) transversalement à l'axe du piston (24) et dans un support (47), qui peut coulisser à travers le piston (25) de l'autre unité de contrôle (16).

5. Dispositif selon l'une quelconque des revendications 1 à 4,
**caractérisé en ce que** quatre unités de contrôle (15, 15' ; 16, 16') s'appliquent sur un bras (6') du levier (6), qui sont disposées à des distances angulaires de respectivement 90°, et **en ce que** de préférence les pistons (24, 25 ; 24', 25') des unités de contrôle (15, 15', 16, 16') s'appliquent sur la tête sphérique (40) d'un bras de levier (6').

6. Dispositif selon la revendication 5,
**caractérisé en ce qu'**au moins l'un des pistons (25, 25') est réceptionné dans un piston auxiliaire (69), et **en ce que** de façon avantageuse le piston (25, 25') peut coulisser par rapport au piston auxiliaire (69).

7. Dispositif selon la revendication 5 ou 6,
**caractérisé en ce que** le piston (24, 25 ; 24', 25') est réceptionné par une douille (74, 75), qui peut coulisser dans un compartiment de pression (67, 68, 82, 83) de l'unité de contrôle (15, 15' ; 16, 16') et **en ce que** de préférence le piston (24, 25 ; 24', 25') peut coulisser par rapport à la douille (74, 75).

8. Dispositif selon l'une quelconque des revendications 1 à 7,
**caractérisé en ce que** l'extrémité libre du levier (94) est disposé entre les pistons (24, 24' ; 25 , 25'), qui s'appliquent avec leurs extrémités libres sur des côtés respectivement opposés sur l'extrémité de levier libre.

9. Dispositif selon l'une quelconque des revendications 1 à 8,
**caractérisé en ce qu'**une unité de contrôle (15, 16) présente deux pistons (100, 101) parallèles l'un à l'autre, qui coopèrent respectivement avec une butée (114, 115) axiale pour le déplacement de l'arbre de commande (9).

10. Dispositif selon la revendication 9,
**caractérisé en ce que** les deux pistons (100, 101) sont logés dans un boîtier (97) commun.

11. Dispositif selon la revendication 9 ou 10,
**caractérisé en ce que** les butées axiales (114, 115) sont situées sur une tige (116) qui est disposée parallèlement à l'axe des pistons (100, 101) et **en ce que** de préférence les butées axiales (114, 115) sont situées de façon non coulissante sur la tige (116), qui peut coulisser par la sortie du piston (100, 101) respectif.

12. Dispositif selon la revendication 11,
**caractérisé en ce que** la tige (116) est reliée à l'arbre de commande (92).

13. Dispositif selon la revendication 9 ou 10,
**caractérisé en ce que** les butées axiales (114, 115) sont disposées de façon non coulissante sur l'arbre de commande (92).

14. Dispositif selon l'une quelconque des revendications 1 à 13,
**caractérisé en ce que**, pour la rotation de l'arbre de commande (92) autour de son axe, il est prévu un levier (114, 127) à deux bras, sur chaque bras (128, 129) duquel est appliqué un piston (122, 123) de l'unité de contrôle (16), et **en ce que** de préférence le levier (114, 127) à deux bras est logé sur la tïge (116) de façon résistante à la torsion.

15. Dispositif selon la revendication 14,
**caractérisé en ce que** le levier (14) à deux bras est formé par une butée axiale.

16. Dispositif selon la revendication 14,
**caractérisé en ce que** le levier (127) à deux bras est logé de façon résistante à la torsion sur l'arbre de commande (92).

17. Dispositif selon la revendication 16,
**caractérisé en ce que** le levier (127) à deux bras présente un logement sphérique pour une tête sphérique (133), qui est prévue sur une pièce d'accouplement (131) agencée transversalement à l'arbre de commande (192) et disposée sur l'arbre de commande (92).

18. Dispositif selon l'une quelconque des revendications 1 à17,
**caractérisé en ce que** l'arbre de commande (92) est relié par un élément de pont (144) au dispositif de contrôle (15, 15' ; 16, 16') et **en ce que** de façon avantageuse l'élément de pont (144) surmonte un élément amortisseur (143).

19. Dispositif selon l'une quelconque des revendications 1 à 18,
**caractérisé en ce que**, sur un bras (165) du levier (159) de la boîte de vitesses manuelle (4), il est prévu des butées (166, 167) espacées les unes des autres et disposées dans un sens de pivotement du levier (159), sur chacune desquelles il est appliqué un piston (100, 101) d'une unité de contrôle (15), et **en ce que** sur un bras (165) du levier (159), il est prévu une autre butée (169), sur chacun des deux côtés opposés de laquelle s'applique un piston (122, 123) de l'autre unité de contrôle (16), qui agit perpendiculairement à une unité de contrôle (15).

20. Dispositif selon l'une quelconque des revendications 1 à 19,
**caractérisé en ce que** sur l'arbre de commande (92) est logée une pièce d'accouplement (176), qui présente trois bras (177, 179) saillants, qui sont disposés à des distances angulaires de respectivement 90°, **en ce que** sur chacun des deux bras (177, 178) se faisant face est appliqué un piston (122, 123), avec lequel l'arbre de commande (92) peut coulisser et **en ce que** sur les côtés se faisant face du troisième bras (179) sont appliqués d'autres pistons (100, 101), avec lesquels l'arbre de commande (192) peut tourner.
